# EUROPÄISCHE PATENTSCHRIFT

(11) **EP 2 285 874 B1**
(45) Veröffentlichungstag und Bekanntmachung des Hinweises auf die Patenterteilung: **07.12.2016**
(21) Anmeldenummer: 09749881.0
(22) Anmeldetag: 20.05.2009
(51) Int. Cl.: C08J 5/00, C08K 7/24

(54) **KOHLENSTOFFNANORÖHREN UND MIKROGELE ENTHALTENDE ORGANISCHE MEDIEN**
CARBON NANOTUBES AND ORGANIC MEDIA CONTAINING MICROGELS
NANOTUBES DE CARBONE ET MILIEUX ORGANIQUES CONTENANT DES MICROGELS

(30) Priorität: 23.05.2008 DE 102008001946
(43) Veröffentlichungstag der Anmeldung: 23.02.2011
(73) Patentinhaber: Future Carbon GmbH, 95448 Bayreuth (DE)
(72) Erfinder: ZISER, Torsten, 69469 Weinheim (DE); FRÜH, Thomas, 67112 Mutterstadt (DE); OBRECHT, Werner, 47447 Moers (DE); RUDOLF, Reiner, 51373 Leverkusen (DE); BUCHHOLZ, Sigurd, 50767 Köln (DE); MICHELE, Volker, 51065 Köln (DE); MLECZKO, Leslaw, 41542 Dormagen (DE); MÜNNICH, Christian, 51377 Leverkusen (DE); WOLF, Aurel, 42489 Wülfrath (DE); DUFF, Daniel, Gordon, 51373 Leverkusen (DE)
(74) Vertreter: Müller, Christian Stefan Gerd
(86) Internationale Anmeldenummer: PCT/EP2009/056165
(87) Internationale Veröffentlichungsnummer: WO 2009/141391

(56) Entgegenhaltungen:
- EP-A- 1 777 259
- EP-A- 1 845 124
- WO-A-2005/033186

## Beschreibung

Die vorliegende Erfindung betrifft organische Medien, die Kohlenstoffnanoröhren und Mikrogele enthalten.

Es ist bekannt, Kautschukgele, auch modifizierte Kautschukgele, in Abmischungen mit verschiedensten Kautschuken einzusetzen, um beispielsweise den Rollwiderstand bei der Herstellung von KFZ-Reifen zu verbessern (siehe z.B. DE 42 20 563, GB-PS 10 78 400, EP 405 216 und EP 854 171). Hierbei werden die Kautschukgele immer in feste Matrices eingearbeitet.

Bekannt ist auch, Druckfarbenpigmente in dafür geeignete flüssige Medien fein verteilt einzuarbeiten, um letztendlich Druckfarben herzustellen (siehe z. B. EP 0 953 615 A2, EP 0 953 615 A3). Hierbei werden Teilchengrössen von bis zu 100 nm erreicht.

Für die Dispergierung können verschiedene Dispergierapparate wie Perlmühlen, Dreiwalzen oder Homogenisatoren verwendet werden. Die Verwendung von Homogenisatoren sowie deren Funktionsweise ist beispielsweise beschrieben im Marketing Bulletin der Fa. APV Homogeniser Group "High-pressure homogenisers processes, product and applications" von William D. Pandolfe und Peder Baekgaard, hauptsächlich für die Homogenisierung von Emulsionen.

Nicht beschrieben in den genannten Dokumenten wird der Einsatz von Kautschukgelen als Feststoffkomponente in Mischungen mit vernetzbaren organischen Medien bestimmter Viskosität mit dem Ziel, feinstverteilte Kautschukgeldispersionen mit Teilchendurchmessern deutlich unter einem µm herzustellen sowie deren Homogenisierung mittels eines Homogenisators.

In Chinese Journal of Polymer Science, Band 20, Nr. 2, (2002), 93-98 werden durch energiereiche Strahlung vollständig vernetzte Mikrogele und ihre Verwendung zur Erhöhung der Schlagzähigkeit von Kunststoffen beschrieben. Bei der Herstellung spezieller Epoxyharzzusammensetzungen tritt intermediär eine Mischung aus einem strahlenvernetzten carboxylendgestoppten Nitril-Butadien-Mikrogel und dem Diglycidylether von Bisphenol A auf. Weitere flüssige Mikrogel-enthaltende Zusammensetzungen werden nicht beschrieben.

Ähnlich offenbart die US 2003/0088036 A1 verstärkte wärmehärtende Harzzusammensetzungen, bei deren Herstellung ebenfalls strahlenvernetzte Mikrogelpartikel mit wärmehärtenden Prepolymeren vermischt werden (siehe EP 1 262 510 A1).

In diesen Druckschriften wird als bevorzugte Strahlungsquelle zur Herstellung der Mikrogelpartikel eine radioaktive Cobaltquelle erwähnt.

Durch den Einsatz der Strahlenvernetzung werden sehr homogen vernetzte Mikrogel-Partikel erhalten. Nachteilig ist an dieser Art der Vernetzung jedoch insbesondere, dass eine Übertragung dieses Verfahrens aus dem Labormaßstab in eine großtechnische Anlage sowohl unter ökonomischen Gesichtspunkten als auch unter Arbeitssicherheitsaspekten nicht realistisch ist. Nicht durch energiereiche Strahlung vernetzte Mikrogele werden in den genannten Druckschriften nicht verwendet. Weiterhin ist bei der Verwendung vollständig strahlenvernetzter Mikrogele die Moduländerung von der Matrixphase zur dispergierten Phase unmittelbar. Hierdurch kann es bei schlagartiger Beanspruchung zu Abreißeffekten zwischen Matrix und dispergierter Phase kommen, wodurch die mechanischen Eigenschaften, das Quellverhalten und die Spannungsrisskorrosion etc. beeinträchtigt werden.

Hinweise auf die Verwendung nicht durch energiereiche Strahlung vernetzter Mikrogele finden sich in den genannten Druckschriften nicht.

Aus den DE 2 910 153 und DE 2 910 168 sind Dispersionen von Kautschukteilchen mit Monomeren bekannt. Diese werden durch Versetzen eines wässrigen Kautschuk-Latex mit den Monomeren unter Zusatz eines Dispergators hergestellt. Zwar erwähnen diese Schriften auch die Möglichkeit, das aus dem Latex resultierende Wasser zu entfernen. Wasserfreie Dispersionen werden jedoch nicht beschrieben. Dispersionen, die wasserfrei sind, können nach diesem Verfahren praktisch nicht erhalten werden (siehe auch die Würdigung in der DE-A-3 742 180, Seite 2, Zeile 10). Dies ist jedoch bei zahlreichen Anwendungen nachteilig. Weiterhin enthalten die in den genannten Patenten beschriebenen Dispersionen zwingend Dispergatoren bzw. Emulgatoren, um eine homogene Verteilung der wässrigen und der organischen Phasen zu erzielen. Die Anwesenheit solcher Emulgatoren bzw. Dispergatoren ist jedoch in vielen Anwendungen sehr störend. Außerdem sind die dort beschriebenen Kautschuk-Partikel relativ grobteilig.

In der WO 2005/033185 sind thermoplastische Elastomer-Zusammensetzung beschrieben, die mindestens einen thermoplastischen Werkstoff und mindestens ein nicht durch energiereiche Strahlung vernetztes Mikrogel auf der Basis von Homopolymeren oder statistischen Copolymeren enthalten.

In der WO 2005/033186 ist beschrieben, dass es möglich ist, nicht durch energiereiche Strahlung vernetzte Mikrogele in vernetzbaren, organischen Medien bestimmter Viskosität beispielsweise mit einem Homogenisator fein zu verteilen. Die Zerteilung der Mikrogele in dem vernetzbaren, organischen Medium bis in den Primärpartikelbereich ist eine Voraussetzung, um die Nanoeigenschaften der Mikrogele in einer Vielzahl an Anwendungen, beispielsweise bei der Einarbeitung in Kunststoffen, insbesondere reproduzierbar nutzbar zu machen.

Die mit diesem Verfahren erhältlichen Zusammensetzungen weisen jedoch keine zufrieden stellenden rheologischen Eigenschaften auf.

Unter Kohlenstoffnanoröhrchen (CNT) werden hauptsächlich zylinderförmige Kohlenstoffröhren mit einem Durchmesser zwischen 3 und 80 nm verstanden, die Länge beträgt ein Vielfaches, mindestens 100-faches, des Durchmessers. Diese Röhrchen bestehen aus Lagen geordneter Kohlenstoffatome und weisen einen in der Morphologie unterschiedlichen Kern auf. Diese Kohlenstoffmanoröhrchen werden beispielsweise auch als "carbon fibrils" oder "hollow carbon fibres" bezeichnet. Kohlenstoffmanoröhrchen haben aufgrund ihrer Dimensionen und ihrer besonderen Eigenschaften eine technische Bedeutung für die Herstellung von Kompositmaterialien. Wesentliche weitere Möglichkeiten liegen in Elektronik-, Energie- und weiteren Anwendungen.

Kohlenstoffmanoröhrchen sind ein seit längerer Zeit bekanntes Material. Obwohl Iijima in 1991 (S. Iiji-ma, Nature 354, 56-58, 1991) allgemein als Entdecker der Nanotubes bezeichnet wird, sind diese Materialien, insbesondere faserförmige Graphitmaterialien mit mehreren Graphitschichten schon länger bekannt. So wurde z.B. bereits in den 70er und frühen 80er Jahren die Abscheidung von sehr feinem faserförmigen Kohlenstoff aus der katalytischen Zersetzung von Kohlenwasserstoffen beschrieben (GB 1 469 930 A1 und EP 0 056 004 A2). Allerdings werden die auf Basis kurzkettiger Kohlenwasserstoffe hergestellten Kohlenstofffilamente nicht näher im Bezug auf ihren Durchmesser charakterisiert. Die Herstellung von Kohlenstoffmanoröhrchen mit Durchmessern kleiner 100 nm ist unter anderem auch in EP 0 205 556 B1 bzw. WO A 86/03455 beschrieben. Für die Herstellung der Kohlenstoffnanoröhrchen werden in der Literatur beispielsweise Lichtbogen-, Laserablations- und katalytische Verfahren genannt. Bei den katalytischen Verfahren kann zwischen der Abscheidung an geträgerten Katalysatorpartikeln und der Abscheidung an in-situ gebildeten Metallzentren mit Durchmessern im Nanometerbereich (sogenannte Flow-Verfahren) unterschieden werden.

Die Verwendung von Kohlenstoffmanoröhrchen als Zusatzstoff in organischen Medien, insbesondere Polymeren, zur Steigerung der mechanischen, thermischen und/oder elektrischen Eigenschaften der Polymere ist aus einer Vielzahl von Veröffentlichungen und Patentanmeldungen bekannt. Nicht bekannt ist bisher allerdings die Kombination von Kohlenstoffnanoröhrchen und Mikrogelen.

Die Zugabe von weichen Mikrogelen zu flüssigen organischen Medien, die ggf. zu einem Kunststoff umgesetzt werden können, führt oftmals zu einer starken Viskositätserhöhung sowie eines Abfalls des E-Moduls und der Härte des resultierenden Kunststoffes. Die Zugabe von CNT's zu flüssigen organischen Medien, die ggf. zu einem Kunststoff umgesetzt werden können, führt oftmals zu einer sehr starken Viskositätserhöhung sowie zu einer Reduktion der Bruchdehnung.

Demgemäß war es die Aufgabe der vorliegenden Erfindung, Zusammensetzungen bereitzustellen, welche Mikrogele in organischen Medien enthalten und die verbesserte mechanische und rheologische Eigenschaften gegenüber den bekannten Mikrogele und organische Medien enthaltenden Zusammensetzungen aufweisen.

Die Aufgabe der vorliegenden Erfindung bestand ausgehend vom Stand der Technik auch darin, eine Zusammensetzung bestehend aus vernetzbaren und/oder nicht vernetzbaren organischen Medien, Mikrogelen und Kohlenstoffmanoröhrchen zu entwickeln, in der die positiven Eigenschaften der Mikrogele, wie gute Bruchdehnung, und der Kohlenstoffnanoröhrchen, wie hohe Festigkeit und elektrische Leitfähigkeit, kombiniert vorliegen.

Eine weitere Aufgabe der vorliegenden Erfindung war die Bereitstellung eines Verfahrens zur Herstellung entsprechender Zusammensetzungen.

Gegenstand der Erfindung ist daher die Entwicklung von geeigneten Zusammensetzungen (Formulierungen) und eines Prozesses zur optimalen Dispergierung von Mikrogelen und Kohlenstoffnanoröhrchen in organischen Medien. Die Zerteilung der Mikrogele und Kohlenstoffnanorörchen in dem vernetzbaren, organischen Medium bis in den Primärpartikelbereich ist beispielsweise eine Voraussetzung, um die Nanoeigenschaften der Mikrogele und Kohlenstoffnanoröhrchen in jedweden Verwendungen, beispielsweise bei der Einarbeitung in Kunststoffen, insbesondere reproduzierbar nutzbar zu machen.

Gelöst wird diese Aufgabe durch eine Zusammensetzung, enthaltend mindestens ein Mikrogel (A), mindestens eine Kohlenstoffnanorohr-Verbindung (B) und mindestens ein organisches Medium (C).
Überraschenderweise zeigte sich, dass es durch die Zugabe von kautschukartigem Mikrogel zu einer Kohlenstoffnanorohr-Verbindung möglich ist, die Härte, das E-Modul E, die Bruchdehnung ε_{B}, die Bruchspannung σ_{B} und den Abriebwiderstand zu erhöhen bzw. zu verbessern sowie die Fließeigenschaften bei Scherraten γ von 0,2 s-1, 5 s-1, und 100 s-1 zu verbessern, obwohl der Festkörperanteil erhöht wird. Erst bei der sehr hohen Scherrate γ von 1000 s-1 zeigt sich der Einfluß des erhöhten Festkörpergehaltes. Durch Zugabe von Mikrogel wird es somit möglich, höhere CNT-Gehalte in flüssige organische Medien einzubringen als dies ohne Mikrogelzugabe möglich wäre.

### Mikrogel (A)

Das in der erfindungsgemäßen Zusammensetzung verwendete Mikrogel (A) ist vorzugsweise ein nicht durch energiereiche Strahlung vernetztes Mikrogel. Energiereiche Strahlung meint hier zweckmäßig elektromagnetische Strahlung einer Wellenlänge von weniger als 0,1 µm.

Die Verwendung von durch energiereiche Strahlung vollständig homogen vernetzten Mikrogelen ist nachteilig, weil sie im großtechnischen Maßstab praktisch nicht durchführbar ist und Probleme der Arbeitssicherheit aufwirft.

Weiterhin kommt es in Zusammensetzungen, die unter Verwendung von durch energiereiche Strahlung vollständig homogen vernetzter Mikrogele hergestellt wurden, bei schlagartiger Beanspruchung zu Abreißeffekten zwischen Matrix und dispergierter Phase, wodurch die mechanischen Eigenschaften, das Quellverhalten und die Spannungsrisskorrosion etc. beeinträchtigt werden.

In einer bevorzugten Ausführungsform der Erfindung weisen die Primärpartikel des Mikrogels (A) eine annähernd kugelförmige Geometrie auf. Als Primärpartikel werden nach DIN 53206 : 1992-08 die durch geeignete physikalische Verfahren (Elektronenmikroskop) als Individuen erkennbaren, in der kohärenten Phase dispergierten Mikrogelteilchen bezeichnet (vgl. z. B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht der Zusammensetzung, beispielsweise mit einem Elektronenmikroskop, erkennbar im Wesentlichen eine kreisförmige Fläche abbilden. Da die Mikrogele in dem organischen Medium (C), beispielsweise bei der Vernetzung, ihre Form im Wesentlichen nicht verändern, gelten die vorstehenden und nachstehenden Ausführungen in gleicher Weise auch für die durch Vernetzung der erfindungsgemäßen Zusammensetzung erhaltenen mikrogel-enthaltenden Zusammensetzungen, falls beispielsweise eine Vernetzung des organischen Mediums erfolgt.

In den in der erfindungsgemäßen Zusammensetzung enthaltenen Primärpartikeln des Mikrogels (A) beträgt die Abweichung der Durchmesser eines einzelnen Primärpartikels, definiert als [(d 1-d2)/d2] x 100, worin d1 und d2 zwei beliebige Durchmesser des Primärpartikels sind und d1 > d2 ist, bevorzugt weniger als 250 %, bevorzugter weniger als 200 %, noch bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95 % der Primärpartikel des Mikrogels eine Abweichung des Durchmessers, definiert als [(d1-d2)/d2] x 100, worin d1 und d2 zwei beliebige Durchmesser des Primärpartikels sind und d1 > d2 ist, von weniger als 250 %, bevorzugter weniger als 200 %, noch bevorzugter weniger als 100 % auf, noch bevorzugter weniger als 80 %, noch bevorzugter weniger als 50 % auf.

Die vorstehend erwähnte Abweichung der Durchmesser der einzelnen Partikel wird nach folgendem Verfahren bestimmt. Zunächst wird ein Dünnschnitt der erfindungsgemäßen Zusammensetzung hergestellt. Dann wird eine transmissionselektronenmikroskopische Aufnahme bei einer Vergrößerung von beispielsweise 10.000fach oder 200.000fach hergestellt. In einer Fläche von 833,7 nm x 828,8 nm wird manuell an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95 % der vermessenen Mikrogel-Primärpartikeln jeweils unter 250 %, bevorzugter unter 100 %, noch bevorzugter unter 80 %, noch bevorzugter unter 50 %, so weisen die Mikrogel-Primärpartikel das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden. In der erfindungsgemäßen Zusammensetzung weisen die Primärpartikel des Mikrogels (A) bevorzugt einen durchschnittlichen Teilchendurchmesser von 5 bis 500 nm, bevorzugter von 20 bis 400 nm, bevorzugter von 20 bis 300 nm, bevorzugter von 20 bis 250 nm, noch bevorzugter von 20 bis 99 nm, noch bevorzugter von 40 bis 80 nm, auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (siehe z. B. H. G. Elias, Makromoleküle, Band 2, Technologie, 5. Auflage, 1992, Seite 99 ff).

Da sich die Morphologie der Mikrogele bei der Polymerisation bzw. Vernetzung der erfindungsgemäßen Zusammensetzung im Wesentlichen nicht verändert, entspricht der durchschnittliche Teilchendurchmesser der dispergierten Primärpartikel im Wesentlichen dem durchschnittlichen Teilchendurchmesser der dispergierten Primärpartikel in der durch Polymerisation bzw. Vernetzung erhaltenen Zusammensetzung.

In der erfindungsgemäßen Zusammensetzung weisen die Mikrogele (A) zweckmäßig in Toluol bei 23 °C unlösliche Anteile (Gelgehalt) von mindestens etwa 70 Gew.-%, bevorzugter mindestens etwa 80 Gew.-%, noch bevorzugter mindestens etwa 90 Gew.-%, auf. Der in Toluol unlösliche Anteil wird dabei in Toluol bei 23 °C bestimmt. Hierbei werden 250 mg des Mikrogels in 20 ml Toluol 24 Stunden unter Schütteln bei 23 °C gequollen. Nach Zentrifugation mit 20.000 U/min wird der unlösliche Anteil abgetrennt und getrocknet. Der Gelgehalt ergibt sich aus dem Quotienten des getrockneten Rückstandes und der Einwaage und wird in Gewichtsprozent angegeben.

In der erfindungsgemäßen Zusammensetzung weisen die Mikrogele (A) zweckmässig in Toluol bei 23 °C einen Quellungsindex von weniger als etwa 80, bevorzugter von weniger als 60, noch bevorzugter von weniger als 40, auf. So können die Quellungsindizes der Mikrogele (Qi) besonders bevorzugt zwischen 1 und 15 liegen. Der Quellungsindex wird aus dem Gewicht des in Toluol bei 23 °C für 24 Stunden gequollenen, lösungsmittelhaltigen Mikrogels (nach Zentrifugation mit 20.000 U/min) und dem Gewicht des trockenen Mikrogels berechnet: Qi = Nassgewicht des Mikrogels/Trockengewicht des Mikrogels.

Zur Ermittlung des Quellungsindex lässt man 250 mg des Mikrogels in 25 ml Toluol 24 h unter Schütteln quellen. Das Gel wird abzentrifugiert und feucht gewogen und anschliessend bei 70 °C bis zur Gewichtskonstanz getrocknet und nochmals gewogen.

In der erfindungsgemäßen Zusammensetzung weisen die Mikrogele (A) zweckmäßig Glastemperaturen Tg von -100 bis 120 °C, bevorzugter von -100 bis 100 °C, noch bevorzugter von -80 bis 80 °C, auf. In seltenen Fällen können auch Mikrogele verwendet werden, die aufgrund ihres hohen Vernetzungsgrades keine Glastemperatur aufweisen.

Glastemperaturen der Mikrogele unterhalb von Raumtemperatur (20 °C) sind insbesondere vorteilhaft, um in mikrogelhaltigen Polymerzusammensetzungen die Weitereißfestigkeit und die Härte weitestgehend unbeeinflusst zu lassen, wohingegen die Rheologie der zu polymerisierenden Zusammensetzungen in gewünschter Weise beeinflusst wird.

Glastemperaturen der Mikrogele (A) oberhalb von Raumtemperatur (20 °C) sind vorteilhaft, um in mikrogelhaltigen Polymerzusammensetzungen eine Erhöhung der Härte, eine größere Verstärkung, eine verbesserte Weiterreißfestigkeit zu erzielen und die Rheologie der zu polymerisierenden Zusammensetzungen in gewünschter Weise zu beeinflussen.

Weiterhin weisen die in der erfindungsgemäßen Zusammensetzung eingesetzten Mikrogele zweckmäßig eine Breite des Glasübergangs von größer als 5 °C, bevorzugt größer als 10 °C, bevorzugter größer als 20 °C, auf.

Mikrogele, die eine solche Breite des Glasübergangs aufweisen, sind in der Regel - im Gegensatz zu vollständig homogen strahlenvemetzten Mikrogelen - nicht vollständig homogen vernetzt. Dies führt dazu, dass die Moduländerung von der Matrixphase zur dispergierten Phase in den aus den erfindungsgemäßen Zusammensetzungen hergestellten vernetzbaren bzw. polymerisierten Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion etc. vorteilhaft beeinflusst werden.

Die Bestimmung der Glasübergangstemperaturen (Tg) und der Breite des Glasübergangs (ΔTg) der Mikrogele erfolgt durch Differentialthermoanalyse (DTA, engl. DSC) unter folgenden Bedingungen:

Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 - 12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100 °C abgekühlt und dann mit einer Geschwindigkeit von 20 K/min auf 150 °C aufgeheizt wird. Der zweite DSC-Zyklus wird durch sofortige Abkühlung der Probe begonnen, sobald eine Probentemperatur von 150 °C erreicht ist. Die Abkühlung erfolgt mit einer Geschwindigkeit von ungefähr 320 K/min. Im zweiten Aufheizzyklus wird die Probe wie im ersten Zyklus noch einmal auf 150 °C aufgeheizt. Die Aufheizgeschwindigkeit im zweiten Zyklus ist erneut 20 K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC-Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, nicht durch energiereiche Strahlung vernetzten Mikrogele, die bevorzugt auf Homopolymeren oder statistischen Copolymeren basieren, können in an sich bekannter Weise hergestellt werden (siehe z.B. EP-A-0 405 216, EP-A-0 854 171, DE-A 42 20 563, GB-PS 10 78 400, DE 197 01 489, DE 197 01 488, DE 198 34 804, DE 198 34 803, DE 198 34 802, DE 199 29 347, DE 199 39 865, DE 199 42 620, DE 199 42 614, DE 100 21 070, DE 100 38 488, DE 100 39 749, DE 100 52 287, DE 100 56 311 und DE 100 61 174). In den Patent(anmeldungen) EP-A 0 405 216, DE-A 42 20 563 sowie in GB-PS 10 78 400 wird die Verwendung von CR-, BR- und NBR-Mikrogelen in Mischungen mit doppelbindungshaltigen Kautschuken beansprucht, in DE 197 01 489 wird die Verwendung von nachträglich modifizierten Mikrogelen in Mischungen mit doppelbindungshaltigen Kautschuken wie NR, SBR und BR beschrieben. Die diesbezüglichen Offenbarungen der vorstehend genannten Patent(anmeldung)e(n) ist durch Bezugnahme in die vorliegende Erfindung eingeschlossen.

In einer bevorzugten Ausführungsform der Erfindung basiert das Mikrogel (A) in der erfindungsgemäßen Zusammensetzung auf Kautschuk. Unter dem Begriff "Mikrogel" werden im Sinne der vorliegenden Erfindung zweckmäßig und vorzugsweise Kautschukpartikel verstanden, die insbesondere durch Vernetzung folgender Kautschuke erhalten werden:
- BR:: Polybutadien,
- ABR:: Butadien/Acrylsäure-C1-4-Alkylestercopolymere,
- IR:: Polyisopren,
- SBR:: Styrol-Butadien-Copolymerisate mit Styrolgehalten von 1 bis 90 Gew.-%, vorzugsweise 5 bis 50 Gew.-%,
- X-SBR:: carboxylierte Styrol-Butadien-Copolymerisate,
- FKM:: Fluorkautschuk,
- ACM:: Acrylatkautschuk,
- NBR:: Polybutadien-Acrylnitril-Copolymerisate mit Acryinitrilgehalten von 5 bis 60 Gew.-%, vorzugsweise 10 bis 50 Gew.-%,
- X-NBR:: carboxlierte Nitrilkautschuke,
- CR:: Polychloropren,
- IIR:: Isobutylen/Isopren-Copolymerisate mit Isoprengehalten von 0,5 bis 10 Gew.-%,
- BIIR:: bromierte Isobutylen/Isopren-Copolymerisate mit Bromgehalten von 0,1 bis 10 Gew.-%,
- CIIR:: chlorierte Isobutylen/Isopren-Copolymerisate mit Bromgehalten von 0,1 bis 10 Gew.-%,
- HNBR:: teil-und vollhydrierte Nitrilkautschuke,
- EPDM:: Ethylen-Propylen-Dien-Copolymerisate,
- EAM:: Ethylen/Acrylatcopolymere,
- EVM:: Ethylen/Vinylacetatcopolymere
- CO und ECO:: Epichlorhydrinkautschuke,
- Q :: Silikonkautschuke,
- AU:: Polyesterurethanpolymerisate,
- EU:: Polyetherurethanpolymerisate,
- ENR :: Epoxydierter Naturkautschuk
oder Mischungen davon.

Die Herstellung der unvernetzten Mikrogel-Ausgangsprodukte erfolgt zweckmässig durch folgende Methoden:
1. Emulsionspolymerisation oder
2. Lösungspolymerisation von Kautschuken, die über Variante 1 nicht zugänglich sind.

Außerdem können natürlich vorkommende Latices wie z. B. Naturkautschuklatex eingesetzt werden.
In der erfindungsgemäßen Zusammensetzung sind die verwendeten Mikrogele (A) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien sowie doppelbindungshaltige Carbonsäuren wie z. B. Acrylsäure, Methacrylsäure, Maleinsäure, Itakonsäure etc., doppelbindungshaltige Hydroxyverbindungen wie z. B. Hydroxyethylmethacrylat, Hydroxyethylacrylat, Hydroxybutylmethacrylat, aminfunktionalisierte (Meth)acrylate, Acrolein, N-Vinyl-2-pyrrolidon, N-Allyl-harnstoff und N-Allyl-thioharnstoff sowie sekundäre Amino-(meth)-acrylsäureester wie 2-tert.-Butylaminoethylmethacrylat und 2-tert.-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben, erreicht werden. Die Verwendung von direkt vernetzten Mikrogelen stellt eine bevorzugte Ausführungsform der Erfindung dar.

Bevorzugte multifunktionelle Comonomere sind Verbindungen mit mindestens 2, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat.

Darüber hinaus kommen in Betracht die Acrylate und Methacrylate von mehrwertigen, vorzugsweise 2- bis 4-wertigen C2- bis C10-Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluss an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie z. B. durch Umlösung zugänglich sind. Auch Naturkautschuklatices können auf diese Weise vernetzt werden.

Geeignete, vernetzend wirkende Chemikalien sind beispielsweise organische Peroxide, wie Dicumylperoxid, tert.-Butylcumylperoxid, Bis-(tert.-butyl-peroxy-isopropyl)benzol, Di-tert.-butylperoxid, 2,5-Dimethylhexan-2,5-dihydroperoxid, 2,5-Dimethylhex-3-in, 2,5-Dihydroperoxid, Dibenzoylperoxid, Bis-(2,4-dichlorobenzoyl)peroxid, tert.-Butylperbenzoat sowie organische Azoverbindungen, wie Azo-bis-isobutyronitril und Azo-biscyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bischlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller oder vollständiger Hydrierung der C=C-Doppelbindung durch Hydrazin, wie in US 5,302,696 oder US 5,442,009 beschrieben, oder gegebenenfalls andere Hydrierungsmittel, beispielsweise Organometallhydridkomplexe, erfolgen.

Vor, während oder nach der Nachvernetzung kann ggf. eine Teilchenvergrösserung durch Agglomeration durchgeführt werden.

Bei dem erfindungsgemäß verwendeten Herstellungsverfahren werden stets nicht vollständig homogen vernetzte Mikrogele erhalten, die die oben beschriebenen Vorteile aufweisen können.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungsmitteln aus.

Man stellt die gewünschten Größen der Mikrogele dadurch her, dass man die Kautschuklösung in einem flüssigen Medium, vorzugsweise in Wasser, gegebenenfalls unter Zugabe geeigneter oberflächenaktiver Hilfsmitteln, wie z. B. Tensiden, mittels geeigneter Aggregate mischt, so dass eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschrieben vor. Als Vernetzer eignen sich die zuvor genannten Verbindungen, wobei man das für die Herstellung der Dispersion eingesetzte Lösungsmittel gegebenenfalls vor der Vernetzung z. B. destillativ entfernen kann.

Als Mikrogele zur Herstellung der erfindungsgemäßen Zusammensetzung können sowohl nicht-modifizierte Mikrogele, die im Wesentlichen keine reaktiven Gruppen insbesondere an der Oberfläche aufweisen als auch modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z. B. Mercapto-, Dithiocarbamat-, Polysulfid-, Xanthogenat-, Thiobenzthiazol-und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit, wenn die erfindungsgemäße Zusammensetzung zur Herstellung der späteren Matrix, in die das Mikrogel eingearbeitet ist, oder die erfindungsgemäße Zusammensetzung zur Einarbeitung in eine Matrix verwendet wird, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmässigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrrolidon, N-Allyl-Harnstoff und N-Allyl-Thioharnstoff sowie sekundären Amino-(meth)-acrylsäureester wie 2-tert.-Butylaminoethylmethacrylat und 2-tert.-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, dass das im Modifikationsschritt verwendete Monomer möglichst quantitativ auf das unmodifizierte Mikrogel aufgepfropft wird. Zweckmäßigerweise werden die funktionellen Monomere vor der vollständigen Vernetzung der Mikrogele hinzudosiert. Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.
Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptane, wie 1,2-Dimercaptoethan oder 1,6-Dimercaptohexan, des weiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natriumisopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhalfterweise auch in Gegenwart von Schwefel durchgeführt werden, wobei der Schwefel unter Bildung polysulfidischer Bindungen mit eingebaut wird. Zur Addition dieser Verbindung können Radikalstarter, wie organische und anorganische Peroxide und/oder Azoinitiatoren, zugesetzt werden.

Auch eine Modifikation doppelbindungshaltiger Mikrogele wie z. B. durch Ozonolyse sowie durch Halogenierung mit Chlor, Brom und Iod kommt infrage.

Auch eine weitere Umsetzung modifizierter Mikrogele wie z. B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch Hydroxylgruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1 und 100, noch bevorzugter zwischen 0,5 und 50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gew.-%, bezogen auf die Gesamtmenge an eingesetztem Kautschuk-Mikrogel, besonders bevorzugt sind 0,5 - 10 Gew.-%, bezogen auf Gesamtmenge an Kautschukgel.

Die Modifizierungsreaktionen können bei Temperaturen von 0 bis 180 °C, bevorzugt 20 bis 95 °C, gegebenenfalls unter Druck von 1 bis 30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wässriger Dispersion des vernetzten Kautschuks durchgeführt.

Die Verwendung von unmodifizierten Mikrogelen ist insbesondere bei erfindungsgemäßen Zusammensetzungen bevorzugt, die vernetzbare Medien enthalten, die zur Bildung von unpolaren thermoplastischen Werkstoffen führen, wie zum Beispiel Polypropylen, Polyethylen und Blockcopolymeren auf Basis von Styrol, Butadien und Isopren (SBR, SIR) sowie hydrierten Isopren-Styrol-Blockcopolymeren (SEBS) und üblichen Thermoplastische Polyolefin-Elastomere (TPE-O) und Thermoplastische Elastomer Vulkanisate (TPE-V), etc.

Die Verwendung von modifizierten Mikrogelen ist insbesondere bei erfindungsgemäßen Zusammensetzungen bevorzugt, die vernetzbare Medien enthalten, die zur Bildung von polaren thermoplastischen Werkstoffen führen, wie zum Beispiel Polyamid (PA), Thermoplastische Polyamide (TPE-A), Polyurethane (PU), Thermoplastische Polyurethan Elastomere (TPE-U), Polycarbonate (PC), Polyethylentelephthat (PET), Polybutylentelephthalat (PBT), Polyoxymethylen (POM), Polymetylmetacrylat (PMMA), Polyvinylchlorid (PVC), Acrylnitril-Butadien-Styrol-Mischpolymerisate (ABS), Polytetrafluorethylen (PTFE), Polyvinilidenfluorid (PVDF), etc.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens 75 Gew.-% aller Teilchen liegen um das Maximum der integrierten Korngrössenverteilungskurve (bestimmt durch Lichtstreuung) in einem Bereich von ±10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden.

Die Aufarbeitung der so hergestellten Mikrogele vorzugsweise auf Basis von BR, SBR, NBR, SNBR oder Acrylnitril oder ABR kann beispielsweise durch Eindampfen, Koagulation, durch Co-Koagulation mit einem weiteren Latexpolymer, durch Gefrierkoagulation (vgl. US-PS 2,187,146) oder durch Sprühtrocknung erfolgen. Bei der Aufarbeitung durch Sprühtrocknung können auch handelsübliche Fliesshilfen wie beispielsweise CaCO3 oder Kieselsäure zugesetzt werden.

### Kohlenstoffnanoröhre (B)

Die erfindungsgemäße Zusammensetzung enthält mindestens eine Kohlenstoffnanoröhren umfassende Verbindung. Unter Kohlenstoffnanoröhren versteht man im Sinne der vorliegenden Erfindung mikroskopisch kleine röhrenförmige Gebilde (molekulare Nanoröhren) aus Kohlenstoff. Ihre Wände bestehen wie die der Fullerene oder wie die Ebenen des Graphits im Wesentlichen nur aus Kohlenstoff, wobei die Kohlenstoffatome eine wabenartige Struktur mit Sechsecken und jeweils drei Bindungspartnern einnehmen (vorgegeben durch die sp2-Hybridisierung).

Kohlenstoffnanoröhren, englisch auch als carbon-nano tube bezeichnet, werden häufig als CNT abgekürzt.

Kohlenstoffnanoröhren leiten sich damit von den Kohlenstoffebenen des Graphits ab, die zu einer Röhre aufgerollt sind: Die Kohlenstoffatome bilden eine wabenartige Struktur mit Sechsecken und jeweils drei Bindungspartnern. Röhren mit ideal hexagonaler Struktur haben eine einheitliche Dicke und sind linear; es sind aber auch geknickte oder sich verengende Röhren möglich, die fünfeckige Kohlenstoffringe enthalten. Je nachdem, wie das Wabennetz des Graphits zur Röhre gerollt wird ("gerade" oder "schräg"), entstehen helikale (schraubenartig gewundene) und auch nicht spiegelsymmetrische, das heißt chirale Strukturen. In der Literatur wird zur Unterscheidung das Indexpaar (n,m) verwendet und zwischen 3 Klassen unterschieden. Diese heißen armchair (mit (n,n), achiral, nicht helikal), zig-zag ((n,0), achiral, helikal) und chiral ((n,m), chiral, helikal). Die ersten beiden Namen beziehen sich auf die Form der Linie, die sich ergibt, wenn man den C-C-Bindungen entlang des Umfangs folgt. Für die erfindungsgemäße Zusammensetzung sind alle drei Klassen geeignet.

Der Durchmesser der erfindungsgemäß vorgesehenen Röhren liegt vorzugsweise im Bereich von 0,1 bis 250 nm, besonders bevorzugt 3 bis 100 nm, insbesondere 5 bis 50 nm. Die Längen der erfindungsgemäß zu verwendenden Kohlenstoffnanoröhren beträgt vorzugsweise 10 nm bis 1 mm, besonders bevorzugt 50 nm bis 100 µm, insbesondere 100 nm bis 20 µm.

Das Aspektverhältnis beträgt vorzugsweise mehr als 100, besonders bevorzugt mehr als 500, insbesondere mehr als 3000 (L : D, d.h. Länge : Durchmesser)).

In der erfindungsgemäßen Zusammensetzung können ein- und mehrwandige Kohlenstoffnanoröhren verwendet werden. Auch offene oder geschlossene Röhren, d.h. Kohlenstoffnanoröhren, welche mit einem oder mit zwei Deckeln, welche einen Ausschnitt aus einer Fullerenstruktur aufweisen, versehen sind, können verwendet werden.

Die Kohlenstoffnanoröhrchen liegen in agglomerierter Form als Partikel mit Partikeldurchmessern von 0,1 - 2 mm vor. Bei der Dispergierung der Kohlenstoffmanoröhrchen in den organischen Medien müssen die Partikel zerteilt und die Nanoröhrchen in der Matrix vereinzelt werden.

Im Rahmen der vorliegenden Erfindung ist es durch Wahl entsprechender Strukturen der Kohlenstoffröhren möglich, die elektrische Leitfähigkeit innerhalb der Röhre entweder metallisch oder halbleitend zu machen; es können auch Kohlenstoffröhren verwendet werden, die bei tiefen Temperaturen supraleitend sind.

Vorzugsweise werden in der erfindungsgemäßen Zusammensetzungen Kohlenstoffnanoröhren verwendet, die eine Dichte von 1,0 bis 2,0 g/cm³, besonders bevorzugt 1,1 bis 1,8 g/cm3, insbesondere 1,5 bis 1,75 g/cm³, aufweisen.

Die erfindungsgemäße Zusammensetzung weist bevorzugt eine Viskosität von 25 mPas bis zu 5000000 mPas, bevorzugter 200 mPas bis zu 3000000 mPas bei einer Drehzahl von 5 s-1 in einem Kegelplattenviskosimeter nach DIN 53018 bei 20 °C auf.

Erfindungsgemäß geeignete Kohlenstoffnanoröhren können mit einer Vielzahl an unterschiedlichen Verfahren erhalten werden. Diese Verfahren umfassen beispielsweise Verfahrensschritte, die in Vorrichtungen, ausgewählt aus der Gruppe, bestehend aus Festbettreaktoren, Rohrreaktoren, Drehrohrreaktoren, blasenbildenden, turbulenten oder durchstrahlten Wirbelschichtreaktoren, intern und extern zirkulierten Wirbelschichtreaktoren, durchgeführt werden.

Eine geeignete Synthese von Kohlenstoffnanoröhren erfolgt durch Lichtbogenentladug von Graphit in der Gegenwart von Metallkatalysatoren (z.B. Fe, Co, Ni). Weitere geeignete Verfahren sind die lasergesteuerte Verdampfung von Mischungen, enthaltend Graphit, Nickel und/oder Cobalt, Chemical-Vapour-Deposition-Verfahren (CVD-Verfahren), wobei unterschiedliche Kohlenstoffquellen verwendet werden können, oder Gasphasensynthesen. Weitere geeignete Verfahren sind beispielsweise in DE 10 2004 054 959 A1, DE 102 57 025, EP 1 059 266, EP 0 205 556 A bzw. WO 86/03455 A und in dem darin zitierten Stand der Technik beschrieben, deren diesbezügliche Offenbarung in die vorliegende Erfindung eingeschlossen ist.

Die in der vorliegenden Erfindung verwendeten Kohlenstoffröhren werden insbesondere nach einem Verfahren erhalten, welches in DE 10 2004 054 859 A1 beschrieben ist.

Die durch die zuvor beschriebenen Verfahren erhältlichen Kohlenstoffröhren weisen unmittelbar nach ihrer Herstellung noch größere Mengen an Verunreinigungen oder Seitenwanddefekten auf, welche durch geeignete Nachbehandlungen beseitigt werden können. Als herstellungsbedingte Verunreinigungen sind vorrangig amorpher Kohlenstoff, durch Graphit eingeschlossene Metallpartikel, graphitähnliche Materialien und Fullerene zu nennen.

Im Rahmen der vorliegenden Erfindung ist es jedoch möglich, auch ungereinigte Kohlenstoffnanoröhren zu verwenden. Demgemäß wird in einer bevorzugten Ausführungsform der vorliegenden Erfindung mindestens eine Kohlenstoffnanoröhre verwendet, die nach ihrer Herstellung keiner Reinigung bzw. Aufarbeitung unterzogen wurde.

Falls die Kohlenstoffnanoröhren einer Reinigung unterworfen werden sollen, so kann dieses mit geeigneten Verfahren erfolgen, die dem Fachmann an sich bekannt sind und Flüssig- und/oder Gasphasenoxidationen umfassen, an welche sich gegebenenfalls Lösemittelextraktionen, Ultraschallbehandlungen, Zentrifugationen, Chromatographien und/oder Mikrowellenbehandlungen anschließen können. Im Rahmen der Flüssigphasenoxidationen werden vorrangig starke Säuren, wie Salpetersäure, Schwefelsäure und/oder Salzsäure, in Verbindung mit entsprechend geeigneten Oxidationsmitteln, wie Wasserstoffperoxid H2O2 oder Kaliumpermanganat KMnO4, verwendet.

Häufig wird auch die Gasphasenoxidation mit der Flüssigphasenoxidation kombiniert, um metallhaltige Verunreinigungen zu entfernen. Eine Übersicht über geeignete Verfahren zur Reinigung von Kohlenstoffnanoröhren sind in der EP 1 428 793 A1 beschrieben, dessen diesbezügliche Offenbarung durch Bezugnahme in die vorliegende Erfindung eingeschlossen ist.

In der erfindungsgemäßen Zusammensetzung können unmodifizierte (nicht modifizierte) eoder durch funktionelle Gruppen modifizierte Kohlenstoffnanoröhren verwendet werden.

In einer Ausführungsform der vorliegenden Erfindung sind die in der erfindungsgemäßen Zusammensetzung verwendeten Kohlenstoffnanoröhren daher funktionalisiert, wobei die Funktionalisierung der Kohlennanostoffröhren entweder kovalent oder nicht-kovalent erfolgen kann.

Die Funktionalisierung erfolgt vorzugsweise über funktionelle Gruppen, die ausgewählt sind aus der Gruppe, bestehend aus Hydroxyl-, Carboxyl- und Amingruppen.

Zur kovalenten Funktionalisierung geeignet sind beispielsweise die zuvor beschriebenen oxidativen Aufarbeitungs- und/oder Reinigungsverfahren, welche im Allgemeinen zum Einführen von Carboxylgruppen in die Kohlenstoffnanoröhren führen. Über diese Carboxylgruppe können dann gegebenenfalls weitere Funktionalisierungen, beispielsweise eine Amidbildung durch Umsetzung der Carbonsäure mit einem entsprechenden Amin, vorgenommen werden. Mit diesem Verfahren ist es auch möglich, Polymere an das Kohlenstoffgerüst der Nanoröhre anzubinden.

An Single-Wall-Kohlenstoffnanoröhren können auch Metallkomplexe durch koordinative Bindungen über das Metallatom und die oxygenierten Kohlenstoffbindungen angebunden werden.

Beispiele weiterer kovalenter Funktionalisierungen für Kohlenstoffnanoröhren, welche in der erfindungsgemäßen Zusammensetzung verwendet werden können, sind Seitenwand-Alkylierungen von fluorierten Kohlenstoffnanoröhren (Boul et al. (1999), Chem Phys. Lett. 310, 367), Reaktionen mit Aryldiazoniumverbindungen (Bahr et al. (2001), J. Am. Chem. Soc. 123, 6536; Bahr et al. (2001), Chem. Mater. 13, 3823; Kooi et al. (2002), Angew. Chem. Int. Ed. 41, 1353), Ultraschall-induzierte Reaktionen mit Monochlorbenzol und Poly(methylmethacrylate) (Koshio et al. (2001), Nano Lett. 1, 361), Additionsreaktionen von Nitrenen und nucleophilen Carbenen (Holzinger et al. (2001), Angew. Chem. Int. Ed., 40, 4002) und Additionsreaktionen von Azomethinyliden (Georgakilas et al. (2002), J. Am. Chem. Soc. 124, 760).

Nicht-kovalente Funktionalisierungen erfolgen im Allgemeinen durch die Adsorption von Molekülen an den Seitenwänden der Kohlenstoffnanoröhren. Zu diesem Zweck werden häufig Tenside verwendet, beispielsweise Natriumdodecylsulfat (Duesberg et al. (1998), Appl. Phys. A 67, 117; Doom et al. (2002), J. Am. Chem. Soc., 124, 3169) oder Triton-Tenside (Tenside aus der Klasse der Octylphenolethoxylate). Bei der Verwendung von Triton-Tensiden kann die Alkoholeinheit des Tensids für weitere kovalent erfolgende Funktionalisierungen dienen (Shim et al. (2002), Nano Lett. 2, 285).

Auch Polymere können an die Kohlenstoffnanoröhren nicht-kovalt gebunden werden (Curran et al. (1998), Adv. Mater. 10, 1091; Tang et al. (1999), Macromolecules 32, 2569; Coleman et al. (2000), Adv. Mater. 12, 213; O'Connell et al. (2001), Chem. Phys. Lett. 342, 265; Bandyopadhyaya et al. (2002), Nano Lett. 2, 25; Star et al. (2002), Angew. Chem. Int. Ed. 41, 2508; Chen et al. (2002), J. Am. Chem. Soc. 124, 9034; Star et al. (2002), Macromolecules 35, 7516).

Auch eine Salzbildung zwischen organischen Aminen und den durch Oxidation entstandenen Carbonsäuregruppen ist möglich (Hamon et al. (1999), Adv. Mater. 11, 834; Chen et al. (2001), J. Phys. Chem. 105, 2525; Chattopadhyay et al. (2002), J. Am. Chem. Soc. 124, 728).

Ferner ist eine Adsorption von Pyrenderivaten an den Seitenwänden der Kohlenstoffnanoröhren möglich.

Im Rahmen der vorliegenden Erfindung können die in der erfindungsgemäßen Zusammensetzung verwendeten Kohlenstoffnanoröhren gegenüber dem organischen Medium (C) und/oder dem Vernetzungsmittel (D) reaktiv oder nicht-reaktiv sein. Dieses kann beispielsweise durch die Art der beteiligten Komponenten, beispielsweise durch die Art der Funktionalisierung der Kohlenstoffnanoröhre gesteuert werden.

### Organisches Medium (C)

Die erfindungsgemäße Zusammensetzung enthält mindestens ein organisches Medium (C). Organisches Medium im Sinne der Erfindung bedeutet, dass die chemische Struktur des Mediums mindestens ein Kohlenstoffatom enthält.

Das in der erfindungsgemäßen Zusammensetzung verwendete Medium (C) ist entweder vernetzbar (C1) oder nicht-vernetzbar (C2). Auch Mischungen von vernetzbaren (C1) oder nicht-vernetzbaren (C2) Medien können verwendet werden.

In einer ersten Ausführungsform der vorliegenden Erfindung ist das organische Medium (C) vernetzbar.

Die erfindungsgemäße Zusammensetzung enthält dann mindestens ein organisches Medium (C1), welches bei einer Temperatur von 120 °C eine Viskosität von weniger als 30000 mPas, bevorzugt weniger als 10000 mPas, bevorzugter weniger als 1000, noch bevorzugter weniger als 750 mPas und noch bevorzugter weniger als 500 mPas, aufweist.

Die Viskosität des vernetzbaren, organischen Mediums wird bei einer Drehzahl von 5 s-1 mit einem Kegel-Platte-Messsystem nach DIN 53018 bei 120 °C bestimmt.

Ein solches Medium ist bei Raumtemperatur (20 °C) flüssig bis fest, bevorzugt flüssig bzw. fließfähig.

Bevorzugt handelt es sich bei den vernetzbaren, organischen Medien (C1) um solche, die über Heteroatome enthaltende funktionelle Gruppen oder C=C-Gruppen vernetzbar sind.

Diese weisen im Allgemeinen die oben genannten Viskositäten auf, wobei es erfindungsgemäß jedoch auch möglich ist, vernetzbare Medien mit höheren Viskositäten zu verwenden und diese mit weiteren vernetzbaren Medien niedrigerer Viskosität zu mischen, um die vorstehend genannten Viskositäten einzustellen.

Als Komponente (C1) werden bevorzugt bei Raumtemperatur (20 °C) flüssige, vernetzbare Medien eingesetzt, die im Allgemeinen durch Reaktion mit einer weiteren Komponente (D), beispielsweise durch radikalische, insbesondere peroxidische Vernetzung in Gegenwart von Radikalstartern oder durch UV-Strahlung, durch Polyaddition oder Polykondensation, wie im folgenden aufgerührt, zu Kunststoffen ausgehärtet werden.

Die Wahl einer zur Vernetzung geeigneten Komponente (D) für ein geeignetes vernetzbares organisches Medium (C1) ist dem Fachmann an sich geläufig, und es kann auf die einschlägige Fachliteratur verwiesen werden.

Die für die Herstellung der erfindungsgemäßen Zusammensetzungen geeigneten flüssigen, vernetzbaren, organischen Medien (C1) sind beispielsweise Polyole auf Polyester-, Polyether- oder Polyetherpolyesterbasis und Epoxidharze, ungesättigte Polyesterharze und Acrylatharze. Die hier beschriebenen Harze bzw. Harzmischungen und ihre Härter bzw. Härtermischungen sind bevorzugt dadurch gekennzeichnet, dass eine Komponente eine Funktionalität nahe 2,0 hat und die andere Komponente eine Funktionalität von bevorzugt 1,5 bis 2,5, bevorzugter von 2 bis 2,5, besitzt, so dass Polymere entstehen, die linear oder schwach verzweigt, aber nicht chemisch vernetzt sind (vgl. hierzu G.W. Becker, D. Braun, Kunststoff-Handbuch, Band 10, "Duroplaste" Carl Hanser Verlag, München, Wien, 1988, Seiten 1ff.). Es können auch Zusätze mono- und multifunktioneller Komponenten mit der Funktionalität 1 bis ca. 4, bevorzugt 1 bis 3 eingesetzt werden, wobei in der Summe Funktionalitäten von etwa 1,5 bis 2,5 resultieren.

Entsprechende vernetzbare organische Medien sind von Walter Krauß in Kittel, Lehrbuch der Lacke und Beschichtungen, S. Hirzel Verlag Stuttgart, Leipzig, Band 2, 1998, beschrieben, dessen diesbezügliche Offenbarung durch Bezugnahme in die vorliegende Erfindung eingeschlossen ist.

Polyesterpolyole werden durch Kondensation von Dicarbonsäuren mit überschüssigen Mengen von Di- oder Polyolen hergestellt oder beruhen auf Caprolactonen.

Als Polyetherpolyole werden bevorzugt solche auf Basis Propylenoxid und/oder Ethylenoxid eingesetzt. Auch kommen Polyoxytetramethylenglykole zum Einsatz.

Die Anlagerung von Alkylenoxiden an Di- oder Polyamine führt zu stickstoffhaltigen basischen Polyethern. Die genannten Polyole werden bevorzugt mit aromatischen Isocyanaten, wie TDI (Toluylendiisocyanat) oder MDI (Methylendiphenyldiisocyanat), in bestimmten Fällen auch mit NDI (Naphthalin-1,5-diisocyanat) oder TODI (3,3'-Dimethyl-4,4'-diisocyanato-biphenyl) und deren Derivaten, aromatischen Polyisocyanaten auf gleicher Basis oder aliphatischen Isocyanaten (HDI, IPDI, H12MDI (4,4'-Dicyclohexylmethandiisocyanat), HDTI (Methylcyclohexyldiisocyanat), XDI (Xylylendiisocyanat), TMDI (Trimethylhexamethylendiisocyanat), DMI (Dimeryldiisocyanat)) oder aliphatischen Polyisocyanaten auf gleicher Basis wie dem Trimeren des HDI (Hexamethylendiisocyanat) oder des IPDI (Isophorondiisocyanat) umgesetzt.

Epoxidharze werden mit aminischen Härtern, Aminaddukten, Aminen oder Polyaminen oder Säureanhydriden ausgehärtet.

Epoxidharze werden hergestellt durch Umsetzung von Phenolen oder Alkoholen mit Epich-Iorhydrin. Das auch mengenmäßig bedeutendste Harz ist der Bisphenol-A-Diglycidylether neben dem Bisphenol-F-Diglycidylether. Weitere Epoxidharze sind die Verdünner wie Hexandiglycidylether, die Epoxid-Novolake, die Glycidylester, die Glycidylamine, die Glycidylisocyanurate und die cycloaliphatischen Epoxide.

Wichtige Amine sind die aliphatischen und cycloaliphatischen Amine wie Diethylentriamin (DETA), Triethylentetramin (TETA), 3,3',5-Trimethylhexamethylendiamin (TMD), Isophorondiamin(IPD), m-Xylylendiamin (MXDA), die aromatischen Amine wie Methylendianilin (MDA), 4,4'-Diaminodiphenylsulfon (DDS), Amin-Addukte wie z. B. aus TMD und Bisphenol-A-diglycidylether und DETA-Phenol-Mannichbase, Polyaminoamide wie sie bei der Amidbildung aus Polyethylenaminen und Monomer- und Dimerfettsäuren entstehen, und Dicyandiamid. Amine mit geeigneter niedriger Funktionalität sind die entsprechenden alkylierten Typen.

Cyclische Säureanhydride sind z. B. Phthalsäureanhydrid (PSA) und Hexahydrophthalsäureanhydrid.

Ungesättigte Polyesterharze sind lineare, lösliche Polykondensationsprodukte aus hauptsächlich Malein- bzw. Fumarsäure und zweiwertigen Alkoholen, die in einem zur Copolymerisation befähigten Monomeren, meist Styrol, gelöst sein können, und werden durch Zugabe von Peroxiden polymerisiert.

Als Säuren können in den UP-Harzen Adipin-, Phthalsäure, Phthalsäureanhydrid, Tetrahydrophthalsäure, Isophthalsäure, Terephthalsäure, Tetrachlorphthalsäure, Tetrabromphthalsäure, Hetsäure und Endo-methylen-tetrahydrophthalsäureanhydrid eingesetzt werden. Als Diole für UP-Harze kommen hauptsächlich 1,2- und 1,3-Propandiol, Ethylenglykol, Diethylenglykol, Dipropylenglykol und Monoallylether von Glycerin und Trimethylolpropan zum Einsatz.

Verwendete Monomere neben sonstigen polymerisierbaren Monomeren sind z. B. Styrol, alpha-Methylstyrol, Methylacrylat, Methylmethacrylat und Vinylacetat.

Die Vernetzung der erfindungsgemäßen, vernetzbaren Zusammensetzung wird bevorzugt peroxidisch oder durch UV-Licht bzw. Elektronenstrahlen durchgeführt.

Den ungesättigten Polyesterharzen ähnlich sind die Vinylester wie sie z. B. von Dow - Derakane und Derakane Momentum - hergestellt werden.

Die für die Herstellung der erfindungsgemäßen Zusammensetzungen geeigneten flüssigen, vernetzbaren, organischen Medien schließen weiterhin beispielsweise ein: multifunktionelle Alkohole, wie difunktionelle Alkohole, wie Ethylenglykol, Propandiol, Butandiol, Hexandiol, Octandiol, Polyetherpolyole, wie Diethylenglykol, Dipropylenglykol, Polyalkylenoxiddiole, wie Polyethylen- und/oder Propylenoxiddiole, Polyhexamethylencarbonatdiole, multifunktionelle Alkohole, wie Glycerin, Trimethylolpropan etc., multifunktionelle Carbonsäuren, cyclische Carbonsäureanhydride, multifunktionelle Isocyanate, wie TDI (Toluylendiisocyanat), MDI (Methylendiphenyldiisocyanat), NDI (Naphthalin-1,5-diisocyanat), TODI (3,3'-Dimethyl-4,4'-diisocyanato-biphenyl) und deren Derivate, HDI, IPDI, H12MDI (4,4'-Dicyclohexylmethandiisocyanat), HTDI (Methylcyclohexyldiisocyanat), XDI (Xylylendiisocyanat), TMDI (Trimethylhexamethylendiisocyanat), DMI (Dimeryldiisocyanat)) oder aliphatischen Polyisocyanaten auf gleicher Basis wie dem Trimeren des HDI (Hexamethylendiisocyanat) oder des IPDI (Isophorondiisocyanat), Polyisocyanatprepolymere, insbesondere oligomerisierte Diisocyanate, verkappte Polyisocyanate, multifunktionelle Amine, wie die oben genannten, wie Ethylendiamin, Tetramethylendiamin, Hexamethylendiamin, Trimethylhexamethylendiamin, Isophorondiamin, Dodecyldiamin, Lactame, wie Caprolactam, Butyrolactam, Lactone, wie gamma-Butyrolacton, Caprolacton, cyclische Ether, wie Tetrahydrofuran, ungesättigte Kohlenwasserstoffe, Ethylen, Propylen, Butadien, Styrol, Methylstyrol, Acrylnitril, Vinylester, wie Vinylacetat, Vinylpropionat, Vinylbutyrat, Cyclopenten, Norbornen, Dicyclopenten, etc.

Weitere mögliche vernetzbare Medien sind Methylmethacrylat, Alkylmethacrylate, Alkylacrylate oder Mischungen mit Comonomeren wie Methacrylaten oder Acrylaten, welche durch Peroxide oder U-V-Strahlung/ Elektronenstrahlung gehärtet werden.

Besonders bevorzugte vernetzbare organische Medien sind Polyole, Polyetherpolyole, Polyetherdiole, Polyesterdiole, Polyetheresterdiole, Polyhexamethylencarbonatdiole, Diisocyanate, Polyisocyanatprepolymere. Insbesondere geeignet sind Polyole. In einer besonders bevorzugten Ausführungsform ist daher das organische Medium ein Polyol, insbesondere ein Diol, oder eine Mischung aus einem Polyol und einem Diol.

In einer weiteren bevorzugten Ausführungsform sind das vernetzbare organische Medium (C1) zumindest ein Polyol, bevorzugt ein Diol, oder eine Mischung aus einem Polyol und einem Diol und das Vernetzungsmittel ein Polyisocyanat, bevorzugt ein Diisocyanat, oder eine Mischung aus einem Polyisocyanat und einem Diisocyanat.

Es ist auch möglich, die üblicherweise als Vernetzter (D) eines Polymersystems bezeichneten polyfunktionellen Verbindungen als vernetzbares Medium im Sinne der Erfindung mit den Mikrogelen und den Kohlenstoffnanoröhren zu mischen, und die erhaltene Zusammensetzung mit der entsprechenden zu vernetzenden Komponente umzusetzen.

Grundsätzlich muss darauf geachtet werden, dass die Mikrogele und/oder die Kohlenstoffnanoröhren, insbesondere wenn diese funktionalisiert sind, gegenüber dem vernetzbaren Medium (System (C, D)) reaktiv sein können.

In den oben beschriebenen Materialien können auch Polymere oder Copolymere der genannten Monomere gelöst sein.

Für die Härtung mit UV-Strahlung/Elektronenstrahlung werden insbesondere Monomere wie z. B. 2-Ethylhexylacrylat (EHA), Stearylacrylat und Polyetheracrylate wie z.B. Polyethyleneglykoldiacrylat 400 (PEG400DA), Polyesteracrylate, die z. B. aus Polyesterpolyolen bzw. entsprechenden Polyol-/Polycarbonsäurengemischen durch Veresterung mit Acrylsäure hergestellt werden, Urethanacrylate und acrylierte Polyacrylate eingesetzt.

Wenn in der erfindungsgemäßen Zusammensetzung ein organisches vernetzbares Medium (C1) und ein Vernetzungsmittel (D) verwendet wird, so umfasst die vorliegende Erfindung auch eine Anordnung, umfassend in räumlich voneinander getrennter Form die erfindungsgemäße Zusammensetzung sowie eine Zusammensetzung, die das Vernetzungsmittel (D) für das vernetzbare organische Medium enthält bzw. eine Zusammensetzung, die aus dem Vernetzungsmittel besteht.

In einer weiteren Ausführungsform enthält die erfindungsgemäße Zusammensetzung ein nicht-vernetzbares organisches Medium (C2).
In diesem Fall weist das organische, nicht-vernetzbare Medium (C2) bei einer Temperatur von 120 °C eine Viskositat von vorzugsweise weniger als 100000 mPas, bevorzugt weniger als 1000 mPas, weiter bevorzugt weniger als 200 mPas, noch bevorzugter weniger als 100 mPas, auf.

Ein solches Medium ist bei Raumtemperatur (20 °C) flüssig bis fest.

Unter nicht-vernetzbaren Medien im Sinne der Erfindung werden insbesondere solche Medien verstanden, die keine über Heteroatome-enthaltende funktionelle Gruppen oder C=C-Gruppen vernetzbare Gruppen enthalten, wie insbesondere übliche Monomere oder Prepolymere, die in üblicher Weise radikalisch, mit UV-Strahlen, thermisch und/oder unter Zusatz von Vernetzungsmitteln (z. B. Polyisocyanate) etc. unter Bildung von Oligomeren oder Polymeren in üblicher Weise vernetzt bzw. polymerisiert werden. Nicht-vernetzbaren Medien sind insbesondere auch Lösemittel, insbesondere solche nach DIN 55 945.

Bevorzugt handelt es sich bei dem nicht vernetzbaren Medium (C2) um bei Raumtemperatur (20 °C) flüssige, nicht vernetzbare Medien, insbesondere um Kohlenwasserstoffe (geradkettige, verzweigte, cyclische, gesättigte, ungesättigte und/oder aromatische Kohlenwasserstoffe mit 1 bis 200 Kohlenstoffatomen, die gegebenenfalls durch ein oder mehrere Substituenten ausgewählt aus Halogenen, wie Chlor, Fluor, Hydroxy, Oxo, Amino, Carboxy, Carbonyl, Aceto und Amido substituiert sein können, synthetische Kohlenwasserstoffe, Polyetherole, Esterole, Phosphorsäureester, siliciumhaltige Öle und Halogenkohlenwasserstoffe bzw. Halogenkohlenstoffe (siehe z. B. Ullmanns Enzyklopädie der technischen Chemie, Verlag Chemie Weinheim, Band 20, (1981) 457 ff., 504, 507ff., 517/518, 524). Diese nicht vernetzbaren Medien (C2) zeichnen sich insbesondere durch Viskositäten von 2 bis 1500 mm²/s (cSt) bei 40 °C aus.

Bevorzugt handelt es sich bei dem nicht-vernetzbaren Medium (C2) um bei Raumtemperatur (20 °C) flüssige, nicht-vernetzbare Medien, insbesondere um Lösemittel nach DIN 55 945 wie Xylol, Solvent Naphtha, Methylethylketon, Methoxypropylacetat, N-Methylpyrrolidon und Dimethylsulfoxid.

Die synthetischen Kohlenwasserstoffe werden gewonnen durch Polymerisation von Olefinen, Kondensation von Olefinen oder Chlorparaffinen mit Aromaten oder dechlorierende Kondensation von Chlorparaffinen. Beispiele sind für die Polymerisatöle die Ethylen-Polymere, die Propylen-Polymere, die Polybutene, die Polymere höherer Olefine, die Alkylaromaten. Die Ethylen-Polymere haben Molekulargewichte zwischen 400 und 2000 g/mol. Die Polybutene besitzen Molekulargewichte zwischen 300 und 1500 g/mol.

Bei den Polyetherolen unterscheidet man aliphatische Polyetherole, Polyalkylenglykole, insbesondere Polyethylen- und Polypropylenglykole, deren Mischpolymerisate, ihre Mono- und Diether sowie Esterether und Diester, Tetrahydrofuran-Polymeröle, Perfluorpolyalkylether und Polyphenylether. Perfluorpolyalkylether haben Molmassen von 1000 bis 10000 g/mol. Die aliphatischen Polyetherole weisen Viskositäten von 8 bis 19 500 mm²/s bei 38 °C auf.

Polyphenylether werden durch Kondensation von Alkaliphenolaten mit Halogenbenzolen hergestellt. Auch der Diphenylether und seine Alkylderivate finden Anwendung.

Beispiele für die Esteröle sind die Alkylester der Adipinsäure, das Bis-(2-ethylhexyl)-sebacat und das Bis-(3,5,5-trimethylhexyl)-sebacat oder -adipat. Eine weitere Klasse bildet die fluorhaltigen Esteröle. Bei Phosphorsäureestern unterscheidet man Triaryl-, Trialkyl- und Alkylarylphosphate. Beispiele sind Tri-(2-ethylhexyl)-phosphat und Bis-(2-ethylhexyl)-phenylphosphat.

Siliciumhaltige Öle sind die Silikonöle (Polymere der Alkyl- und Arylsiloxanreihe) und die Kieselsäureester.

Zu den Halogenkohlenwasserstoffen bzw. Halogenkohlenstoffen gehören chlorierte Paraffine, wie Chlortrifluorethylenpolymerole und Hexafluorbenzol.
(Nicht-reaktive) Lösemittel nach DIN 55 945 sind Hexan, Siedegrenzbenzine, Testbenzine, Xylol, Solvent Naphtha, Balsamterpentinol, Methylethylketon, Methylisobutylketon, Methylamylketon, Isophoron, Butylacetat, 1-Methoxypropylacetat, Butylglykolacetat, Ethyldiglykolacetat und N-Methylpyrrolidon (Brock, Thomas, Groteklaes, Michael, Mischke, Peter, Lehrbuch der Lacktechnologie, Curt R. Vincentz Verlag Hannover, (1998) 93ff).

Besonders bevorzugte nicht-vernetzbare Medien (C2) sind die große Klasse der Kohlenwasserstoffe, die Polyetheröle, und die Lösemittel nach DIN 55 945.

### Zusammensetzung

Die erfindungsgemäße Zusammensetzung enthält bevorzugt 0,5 bis 90 Gew.-%, bevorzugter 1 bis 60 Gew.-%, bevorzugter 1 bis 40 Gew.-%, noch bevorzugter 2 bis 30 Gew.-%, noch bevorzugter 5 bis 25 Gew.-%, des Mikrogels (A), bezogen auf die Gesamtmenge der Zusammensetzung.

Die erfindungsgemäße Zusammensetzung enthält vorzugsweise 0,1 bis 90 Gew.-%, bevorzugt 0,1 bis 80 Gew.-%, besonders bevorzugt 0,1 bis 50 Gew.-%, insbesondere 0,5 bis 40 Gew.-%, speziell 1 bis 20 Gew.-%, noch spezieller 1 bis 10 Gew.-%, der Kohlenstoffnanoröhren (B), bezogen auf die Gesamtmenge der Zusammensetzung.

Die erfindungsgemäße Zusammensetzung enthält weiterhin bevorzugt 10 bis 99,9 Gew.-%, bevorzugter 40 bis 97 Gew.-%, bevorzugter 30 bis 95 Gew.-%, noch bevorzugter 50 bis 95 Gew.-%, weiterhin bevorzugter 60 bis 95 Gew.-%, des organischen Mediums (C).

Es ist weiter bevorzugt, wenn das Gewichtsverhältnis von dem mindestens einen Mikrogel (A) zu der mindestens einen Kohlenstoffnanoröhre (B) 0,1 : 100 bis 100 : 0,1 besonders bevorzugt 1 : 90 bis 90 : 1, insbesondere 10 : 90 bis 90 : 10, speziell 10 : 50 bis 50 : 10, beträgt.

In einer weiteren Ausführungsform der vorliegenden Erfindung beträgt das Gewichtsverhältnis von mindestens einem Mikrogels (A) zu mindestens einer Kohlenstoffhanoröhre (B) 0,1 zu 99 bis 99 zu 0,1.

Die erfindungsgemäße Zusammensetzung besteht bevorzugt aus dem Mikrogel, der Kohlenstoffnanoröhre und dem organischen Medium und gegebenenfalls dem Vernetzungsmittel (D). Die Anwesenheit von Wasser ist nicht bevorzugt. Bevorzugt enthalten die erfindungsgemäßen Zusammensetzungen weniger als 0,8 Gew. -%, noch bevorzugter weniger als 0,5 Gew. -% Wasser. Am meisten bevorzugt ist die Anwesenheit von Wasser ausgeschlossen (< 0,1 Gew. -%).

In einer bevorzugten Ausführungsform der vorliegenden Erfindung kann die erfindungsgemäße Zusammensetzung auch eine Mischung aus einem vernetzbaren und einem nichtvernetzbaren organischen Medium enthalten. Es ist weiter bevorzugt, wenn das Gewichtsverhältnis von dem vernetzbaren (C1) zu dem nicht-vernetzbaren Mediumanteil (C2) 0,1 : 99 bis 99 : 0,1, besonders bevorzugt 10 : 90 bis 90 : 10, insbesondere 10 : 50 bis 50 : 10, beträgt. Hinsichtlich der einzelnen Lösemittelarten wird auf obige Ausführungen hinsichtlich der einzelnen Medien (C1) und (C2) verwiesen. Auch in diesem Fall wird für das vernetzbare organische Lösemittel (C1) ein Vernetzungsmittel (D) verwendet.

Gegebenenfalls kann die erfindungsgemäße Zusammensetzung zusätzlich übliche Füllstoffe und Additive, insbesondere Pigmente, enthalten.

Besonders geeignete Pigmente und Füllstoffe zur Herstellung der erfindungsgemäßen Zusammensetzungen, die das organische Medium enthalten, und daraus hergestellter Mikrogelenthaltenden Kunststoffe sind beispielsweise: anorganische und organische Pigmente, silikatische Füllstoffe wie Kaolin, Talkum, Carbonate wie Calciumcarbonat und Dolomit, Bariumsulfat, Metalloxide, wie Zinkoxid, Calciumoxid, Magnesiumoxid, Aluminiumoxid, hochdisperse Kieselsäuren (gefällte und thermisch hergestellte Kieselsäuren), Metallhydroxide, wie Aluminiumhydroxid und Magnesiumhydroxid, Glasfasern und Glasfaserprodukte (Latten, Stränge oder Mikroglaskugeln),Kohlenstofffasern, Thermoplastfasern (Polyamid, Polyester, Aramid), Kautschukgele auf Basis Polychloropren und/oder Polybutadien oder auch aller anderer vorher beschriebener Gelpartikel, die einen hohen Vernetzungsgrad besitzen und Teilchengrösse 5 bis 1000 nm.
Die genannten Füllstoffe können alleine oder im Gemisch eingesetzt werden.

Die erfindungsgemäßen Zusammensetzungen können weitere Hilfsmittel enthalten wie Vernetzer, Reaktionsbeschleuniger, Alterungsschutzmittel, Wärmestabilisatoren, Lichtschutzmittel, Ozonschutzmittel, Weichmacher, Tackifier, Treibmittel, Farbstoffe, Wachse, Streckmittel, organische Säuren, Verzögerer, sowie Füllstoffaktivatoren, wie beispielsweise Trimethoxysilan, Polyethylenglykol, Lösungsmittel, wie die oben genannten, oder andere, die in den beschriebenen Industrien bekannt sind.

Die Hilfsmittel werden in üblichen Mengen, die sich u. a. nach dem Verwendungszweck richten, eingesetzt. Übliche Mengen sind z. B. Mengen von 0,1 bis 80 Gew.-%, bevorzugt 0,1 bis 50 Gew.-%, bezogen auf die eingesetzte Menge an flüssigem, vernetzbaren Medium.

### Verfahren zur Herstellung erfindungsgemäßer Zusammensetzungen

In einer besonders bevorzugten Ausführung des Verfahrens werden 1 bis 30 Gewichtsteile Kautschukgel, gegebenenfalls zusammen mit 0,1 bis 40 Gewichtsteilen Füllstoffen, und 30 bis 99 Gewichtsteile des organischen Mediums (C) zur Herstellung der erfindungsgemäßen Zusammensetzungen eingesetzt.

Die erfindungsgemäße Zusammensetzung weist vorzugsweise eine Viskosität von 25 mPas bis 20.000.000 mPas, besonders bevorzugt 25 bis 2.000.000 mPas, insbesondere 50 bis 1.000.000 mPas, jeweils bei einer Drehzahl von 5 s-1 auf einem Kegel-Platte-Meßsystem nach DIN 53018 bei 20 °C bestimmt, auf.

In einer bevorzugten Ausführungsform wird die erfindungsgemäße Zusammensetzung durch Mischen von mindestens einem zuvor definierten organischen Medium, mindestens einer zuvor definierten Kohlenstoffnanoröhre und mindestens einem zuvor definierten Mikrogel hergestellt. In einer bevorzugten Ausführungsform wird mindestens ein trockenes Mikrogelpulver (A) (bevorzugt weniger als 1 Gew.-%, noch bevorzugter weniger als 0,5 Gew.-% flüchtige Anteile (beim Mischen der Komponente (C) und (B) werden keine Mikrogel-Latices verwendet)) verwendet. Das Mischen erfolgt vorzugsweise mittels eines Homogenisators, eines Düsenstrahldispergators, einer Perlmühle, eines Dreiwalzwerks, einer Ein- oder Mehrwellen-Extruderschnecke, eines Kneters und/oder eines Dissolvers, bevorzugt mittels eines Homogenisators, eines Düsenstrahldispergators, einer Perlmühle, eines Dreiwalzwerks oder eines Dissolvers. Der Dissolver dient vorrangig dem Mischen und Vordispergieren, die anderen Geräte der Dispergierung der Komponenten. Die Reihenfolge der Zugabe der einzelnen Feststoffkomponenten ist beliebig. Bevorzugt hat sich jedoch herausgestellt, dass in dem Fall der Verwendung von vernetzbaren organischen Medien (C1) die Komponenten (A) und (B) nur in die Komponente (D), weiter bevorzugt nur in die Komponente (C1), noch weiter bevorzugt in die Komponente (C1) und (D) eingearbeitet werden. Durch eine Einarbeitung in die Komponente (C1) und (D) lässt sich eine höhere Gesamtkonzentration realisieren.

Besonders bevorzugt erfolgt die Homogenisierung der erfindungsgemäßen Zusammensetzungen mittels eines Homogenisators oder eines Dreiwalzwerks.

Sehr bevorzugt erfolgt die Homogenisierung der erfindungsgemäßen Zusammensetzungen mittels eines Homogenisators.

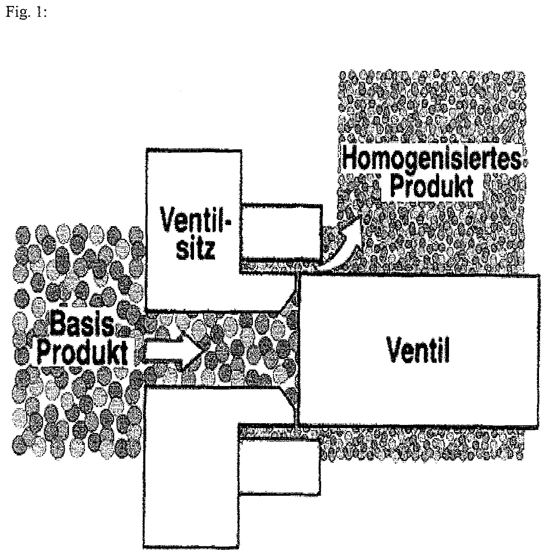

Die Dispergierung der Mikrogele (A) im flüssigen Medium (C) erfolgt im Homogenisator im Homogenisierventil (s. Figur 1).

Bei dem erfindungsgemäß eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

Figur 1 zeigt die Funktionsweise des Homogenisierventils.

Das zu homogenisierende Produkt tritt in das Homogenisierventil mit langsamer Geschwindigkeit ein und wird im Homogenisierspalt auf hohe Geschwindigkeiten beschleunigt. Nach dem Homogenisierspalt wird der Produktstrom um 90 ° umgelenkt. Die Dispergierung erfolgt hinter dem Spalt hauptsächlich aufgrund von Scherung, Turbulenzen und Kavitation.

Die Temperatur der erfindungsgemäßen Zusammensetzung beträgt bei Aufgabe in den Homogenisator zweckmäßig -40 bis 140 °C, vorzugsweise 20 bis 80 °C.

Die zu homogenisierende erfindungsgemäßen Zusammensetzung wird zweckmäßig bei einem Druck von 20 bis 4000 bar, bevorzugt 100 bis 4000 bar, bevorzugt 200 bis 4000 bar, bevorzugt 200 bis 2000 bar, sehr bevorzugt 500 bis 1500 bar im Gerät homogenisiert. Die Anzahl der Durchläufe richtet sich nach der gewünschten Dispergiergüte und kann zwischen einem und vierzig, bevorzugt einem bis zwanzig, bevorzugter einem bis vier Durchgängen variieren.

Weiterer Gegenstand der vorliegenden Erfindung sind die durch das zuvor beschriebene Verfahren erhältlichen Zusammensetzungen.

Die Erfindung betrifft weiterhin die Verwendung der erfindungsgemäßen Zusammensetzung zur Herstellung von Polymeren, die Mikrogele und Kohlenstoffnanoröhren enthalten.

Werden als vernetzbare Komponente solche Komponenten verwendet, die zur Bildung von thermoplastischen Polymeren führen, stellt man fest, dass Mikrogel-enthaltende Polymere erhalten werden, die sich wie thermoplastische Elastomere verhalten. Die Erfindung betrifft somit insbesondere auch thermoplastische Elastomere, die durch die Polymerisation bzw. Vernetzung der erfindungsgemäßen Zusammensetzungen, die die Komponente enthalten, erhalten werden.

Die Erfindung betrifft weiterhin auch die Polymere bzw. Vernetzungsprodukte, insbesondere die thermoplastischen Elastomere, die durch Vernetzen bzw. Polymerisieren der die Mikrogele und die vernetzbare Komponente enthaltenden Zusammensetzungen erhalten werden, sowie die daraus nach üblichen Verfahren hergestellten Formkörper und Beschichtungen.

Die Formkörper werden oder Beschichtungen werden durch Formen oder Beschichten unter Verwendung der erfindungsgemäßen Zusammensetzung hergestellt.

Weiterer Gegenstand der vorliegenden Erfindung ist die Verwendung der erfmdungsgemäßen Zusammensetzung zur Herstellung von Duroplasten, die Mikrogele und Kohlenstoffnanoröhren enthalten und organische Medien, wie z.B. ungesättigten Polyester- (UP)-, Melamin- Formaldehyd (MF)- und Phenol- Formaldehyd (PF)- oder Epoxid- (EP)- Harzen, sowie die Verwendung der erfindungsgemäßen Zusammensetzung zur Herstellung von Duroplasten auf Basis von Polyurethanen.

Im Vergleich zur Einarbeitung von Mikrogelen in Polymere durch Extrusionsverfahren, wie sie zum Beispiel in der DE 103 45 043 beschrieben ist, oder den so genannten in-situ-Verfahren, bei denen die Kautschukteilchen während des Misch- bzw. des Dispergierprozesses vernetzt werden (z. B. US 5,013,793), erlauben die erfindungsgemäßen Zusammensetzungen eine besonders einfache und gleichmäßige Einarbeitung von Mikrogelen in Polymere, wodurch die erhaltenen Polymere überraschend verbesserte Eigenschaften besitzen.

Die Erfindung betrifft somit auch ein Verfahren zur Herstellung von Polymerzusammensetzungen, die mindestens ein Mikrogel und mindestens eine Kohlenstoffnanoröhre enthalten, durch Polymerisation der erfindungsgemäßen Zusammensetzung. Insbesondere umfasst das erfindungsgemäße Verfahren das Mischen mindestens eines zuvor definierten organischen Mediums (C), mindestens eines Mikrogels (A), das nicht durch energiereiche Strahlen vernetzt ist, und mindestens einer Kohlenstoffnanoröhre (B) und gegebenenfalls die anschließende Zugabe eines Vernetzungsmittels (D) für das vernetzbare Medium und das gegebenenfalls anschließende Vernetzen bzw. Polymerisieren der Zusammensetzung. Nach diesem Verfahren können so genannte thermoplastische Elastomere erhalten werden, d. h. Polymere, die sich aufgrund der Anwesenheit der Mikrogelphase bei niedrigen Temperaturen (wie Raumtemperatur) wie Elastomere verhalten, bei höheren Temperaturen sich jedoch wie Thermoplaste verarbeiten lassen.

In einer bevorzugten Ausführungsform des obigen Verfahrens ist das organische Medium ein vernetzbares, organisches Medium (C1), insbesondere ein Polyol, bevorzugter ein Diol, oder eine Mischung davon und das Vernetzungsmittel (D) ein Polyisocyanat, bevorzugt ein Diisocyanat, oder eine Mischung davon. Gegebenenfalls können, wie dem Fachmann bekannt ist, auch monofunktionelle, so genannte Kettenabbruchsmittel anwesend sein.

Die erfindungsgemäße hergestellten Zusammensetzungen besitzen eine besonders feine Parikelverteilung, die besonders mit dem Homogenisator erreicht wird, der auch hinsichtlich der Flexibilität des Verfahrens bezüglich variierender Viskositäten der flüssigen Medien und der resultierenden Zusammensetzungen und notwendigen Temperaturen sowie der Dispergiergüte äußerst vorteilhaft ist.

Die Erfindung betrifft weiterhin die Verwendung der erfindungsgemäßen Zusammensetzungen zur Herstellung von Formartikeln sowie die aus den erfindungsgemäßen Zusammensetzungen erhältlichen Formartikel. Beispiele derartiger Formartikel schließen ein: Steckverbindungen, Dämpfungs-, insbesondere Schwingungs- und Stossdämpfungselemente, akustische Dämpfungselemente, Profile, Folien, insbesondere dämpfende Folien, Fußmatten, Bekleidung, insbesondere Schuheinlagen, Schuhe, insbesondere Skischuhe, Schuhsohlen, Elektronische Bauteile, Gehäuse für elektronische Bauteile, Werkzeuge, dekorative Formkörper, Verbundwerkstoffe, Formteile für Automobile etc.

Weiterer Gegenstand der vorliegenden Erfindung ist die Verwendung der erfindungsgemäßen Zusammensetzung als rheologisches Additiv, zur Herstellung von Formkörpern und Beschichtungen, insbesondere als Verdicker oder Thixotropiermittel.

Dabei ist bei der Verwendung zur Herstellung von Formkörpern und Beschichtungen der Bereich Automotive und Dämpfung bevorzugt.

Die erfindungsgemäßen Formartikel können aus den erfindungsgemäßen Zusammensetzungen durch übliche Verarbeitungsverfahren hergestellt werden, wie durch Abgiessen und Spritzen über 2-K-Anlagen, Schmelzextrusion, Kalandrieren, Injection Moulding (IM), Compression Moulding (CM), und Rejection Injection Moulding (RIM) etc.

Mit der erfindungsgemäßen Zusammensetzung sind einige Vorteile verbunden:

Durch die feine Dispergierung gelingt eine reproduzierbare Einstellung kritischer anwendungstechnischer Eigenschaften. Die erfindungsgemäßen, die speziellen Mikrogele, Kohlenstoffnanoröhren, vernetzbare und/oder nicht-vernetzbare, organische Medien, enthaltenden Zusammensetzungen können eine Vielzahl neuer Anwendungen von Mikrogelen oder Kohlenstoffnanoröhren erschließen, die mit den Mikrogelen oder den Kohlenstoffnanoröhren selbst bislang nicht zugänglich waren.

So eröffnen die erfindungsgemäßen Flüssigkeiten neue Applikationsmöglichkeiten wie z. B. Gießen, Spritzen, Beschichten, die den flüssigen Zustand sowie definierte rheologische Bedingungen als Voraussetzung haben.

Durch Polymerisation der erfindungsgemäßen, vernetzbare organische Medien, der Kohlenstoffnanoröhren (CNT) und Mikrogel, enthaltenden Zusammensetzungen können beispielsweise Kunststoffe mit völlig neuen Eigenschaften erhalten werden. Die erfindungsgemäßen Mikrogel und CNT-enthaltenden Zusammensetzungen können auf einer Vielzahl von Gebieten Anwendung finden, wie z.B. in elastomeren PU-Systemen (Kaltgießsysteme und Heißgießsysteme) sowie thermisch und elektrisch leitfähige Systeme mit besonderen rheologischen Eigenschaften.

In den erfindungsgemäßen Mikrogel und CNT-enthaltenden Zusammensetzungen bilden an sich unverträgliche Materialien überraschend eine homogene Verteilung, die auch bei längerer Lagerung (6 Monate) stabil bleibt.

In den erfindungsgemäßen Zusammensetzungen wird oftmals eine sehr starke Strukturviskosität oder Thixotropie gefunden. Dies kann genutzt werden, um neben anderen Eigenschaften, das Fließverhalten von beliebigen flüssigen Zusammensetzungen durch die erfindungsgemäße Zusammensetzung gezielt zu steuern. Dies kann beispielsweise vorteilhaft ausgenutzt werden bei füllstoffhaltigen Zusammensetzungen, die zum Sedimentieren neigen. An den erfindungsgemäßen Zusammensetzungen sind unerwartete Eigenschaftskombinationen festzustellen; so werden durch Zugabe der weichen Mikrogelpartikel zum CNT überraschenderweise die Härte, E-Modul E, Bruchdehnung εB, Bruchspannung ⊏B und Abriebwiderstand erhöht bzw. verbessert; zudem wird durch die Zugabe von Mikrogel zu der dazugehörigen, untersuchten Polyolkomponente, die CNT-Fasern enthält, die Rheologie in interessanter Weise beeinflusst:

Durch Zugabe von 5 % Mikrogel zu der CNT haltigen Polyolkomponente wird überraschenderweise die dynamische Viskosität bei bestimmten Scherraten gesenkt, obwohl der Festkörperanteil erhöht wird. Dies ist wünschenswert, damit die CNT-Nanofasern in höherer Konzentration eingesetzt werden können.

Die Erfindung wird mit Blick auf die folgenden Beispiele näher erläutert.

### Beispiel: Hydroxylgruppenmodifziertes SBR-Mikrogel-CNT-Kombination in RC-PUR KE 8306

Bei RC-PUR KE 8306 handelt es sich um eine aktivierte Polyolabmischung zur Herstellung von PUR im Kaltgießverfahren der Fa. Rhein Chemie Rheinau GmbH.

Als Vernetzungskomponente wird RC-DUR 120, ein aromatisches Polyisocyanat der Fa. Rhein Chemie Rheinau GmbH, eingesetzt.

OBR 1283 ist ein vernetztes, oberflächenmodifiziertes Kautschukgel auf Basis von SBR. Die Herstellung von OBR 1283 wird nachfolgend beschrieben:

Für die unten beschriebenen Versuche wurde Latex verwendet, dem das Wasser durch Sprühtrocknung entzogen wurde.

### Herstellung und Charakterisierung des funktionalisierten Mikrogels OBR 1283 (Direktvernetztes Mikrogel)

Für die Herstellung des Mikrogels werden folgende Monomere eingesetzt: Butadien, Styrol, Trimethylolpropantrimethacrylat (TMPTMA) und Hydroxyethylmethacrylat (HEMA).

### Herstellung von OBR 1283:

Es wurden 148 g des Na-Salzes einer langkettigen Alkylsulfonsäure (Mersolat ® H 95 der Lanxess Deutschland GmbH) in 10,762 kg Wasser gelöst und in einem 40 1-Autoklaven vorgelegt. Der Autoklav wurde dreimal evakuiert und mit Stickstoff beaufschlagt. Danach wurden 4404 g Butadien, 489 g Styrol, 186 g Trimethylolpropantrimethacrylat (90%ig), 563 g Hydroxyethylmethacrylat (96%) zugegeben. Die Reaktionsmischung wurde unter Rühren auf 30°C aufgeheizt. Anschließend wurde eine wässrige Lösung bestehend aus 95 g Wasser, 950 mg Ethylendiamintetraessigsäure (Merck-Schuchardt), 760 mg Eisen(II)-sulfat*7H20, 1,95 g Rongalit C (Merck-Schuchardt) sowie 2,95 g Trinatriumphosphat*12H2O zudosiert.

Die Reaktion wurde durch Zugabe von 3,15 g p-Menthanhydroperoxid (Trigonox NT 50 der Akzo-Degussa) in 200 g Wasser gestartet, wobei mit 185 g Wasser nachgespült wurde. Nach 2,5 Stunden Reaktionszeit wurde die Reaktionstemperatur auf 40 °C erhöht. Nach einer weiteren Stunde Reaktionszeit wurde mit 350 mg p-Menthanhydroperoxid (Trigonox NT 50), das in einer wässrigen Lösung von 25 g Wasser und 1,25 g Mersolat K30/95 gelöst war, nachaktiviert. Hierbei wurde die Polymerisationstemperatur auf 50°C erhöht. Bei Erreichen eines Polymerisationsumsatzes >95 % wurde die Polymerisation durch Zugabe einer wäßrigen Lösung von 53 g Diethylhydroxylamin gelöst in 100 g Wasser, abgestoppt. Danach wurden nicht umgesetzte Monomeren durch Strippen mit Wasserdampf aus dem Latex entfernt.

Der Latex wurde filtriert und wie im Beispiel 2 der US 6399706 mit Stabilisator versetzt, koaguliert und getrocknet.

Das Gel wurde sowohl im Latexzustand mittels Ultrazentrifugation (Durchmesser und spezifische Oberfläche) sowie als Festprodukt bezüglich der Löslichkeit in Toluol (Gelgehalt, Quellingsindex/QI), durch acidimitrische Titration (OH-Zahl und COOH-Zahl) und mittels DSC (Glastemperatur/Tg und Breite der Tg-Stufe) charakterisiert.

Charakteristische Daten von OBR 1283 sind in folgender Tabelle zusammengestellt.

| Mikrogel | Durchmesser | | | O-spez. | Gelgehalt | Quellungsindex | Tg | Breite der | OH-Zahl | SäureZahl |
|---|---|---|---|---|---|---|---|---|---|---|
| | d10 | D50 | d80 | | | | | | | |
| | [nm] | [nm] | [nm] | | [Gew. | | [°C] | Tg- | [mg_{KOH}/ | [mgKOH/ |
| OBR | | | | [m²/g] | %] | | | Stufe | g_{Pol}.] | g_{Pol}.] |
| | | | | | | | | [°C] | | |
| 1283 | 39 | 48 | 53 | 135 | 99,4 | 8,8 | -65 | 9,4 | 37,6 | 2,5 |

Für die Herstellung der erfindungsgemäßen Zusammensetzung wird RC-PUR KE 8306 vorgelegt; OBR 1283 und die Kohlenstoffnanoröhren werden unter Rühren am Dissolver zugeben. Die Mischung wird mindestens einen Tag lang stehen gelassen, im Vakuum entgast und dann mit dem Homogenisator weiterverarbeitet.

Die erfindungsgemäße Zusammensetzung wird bei Raumtemperatur in den Homogenisator gegeben und bei 900 bis 1000 bar oder 1900 bar im Batchbetrieb dreimal durch den Homogenisator gegeben. (Tabelle 1). Beim ersten Durchgang (1000 bar) erwärmt sich die Mikrogelpaste auf ca. 40 °C, beim zweiten Durchgang auf ca. 70 °C, bei dem dritten Durchgang auf ca. 90 °C. Nach Abkühlen wird die Homogenisierung fortgesetzt, bis fünf Durchgänge erreicht wurden.

**Tab. 1. Zusammensetzung der erfindungsgemäßen Mischungen I bis IV auf Basis RC-PUR KE 8306 (Angaben in Gew%)**

| Mischung | RC-PUR KE 8306 | OBR 1283 | Kohlenstoffröhrehen |
|---|---|---|---|
| I | 99,9 | 0 | 0,1 |
| II | 99,4 | 0,5 | 0,1 |
| III | 99,0 | 0 | 1,0 |
| IV | 94,0 | 5,0 | 1,0 |

Im Anschluss wird die erfindungsgemäße Zusammensetzung mit RC-DUR 120 zu einem Polymer umgesetzt, das zu der Klasse der Kaltgießelastomere (PUR-E) gehört.

Die Shore-Härten der Mischung sind in Tab. 2 dargestellt.

**Tab. 2. Shore-Härten der erfindungsgemäßen Mischungen I bis IV auf Basis RC-PUR KE 8306.**

| Mischung / Homogenisierung | Shore A | Shore D |
|---|---|---|
| I 5*1000 bar | 98 | 82 |
| II 5*1000 bar | 98 | 84 |
| III 5*1900 bar | 98 | 76 |
| IV 5*1900 bar | 98 | 80 |

Die Zugabe von Mikrogel zu RC-PUR KE 8306 hat auf Shore A keinen Einfluß; Shore D wird überaschenderweise durch die Zugabe des weichen Mikrogels gesteigert.

Die Ergebnisse des Zug-Dehnungsversuches der erfindungsgemäßen Mischungen sind in Tab. 3 dargestellt.

**Tab. 3. Maximaler E-Moduli E, Bruchdehnungen ε_{B} und Bruchspannung σ_{B} der erfindungsgemäßen Mischungen I bis IV auf Basis RC-PUR KE 8306.**

| Mischung-Nr. | Zusammensetzung Homogenisierung | E-Moduli E | Bruchdehnung ε_{B} | Bruchspannung σ_{B} |
|---|---|---|---|---|
| | | [N/mm²] | [%] | [MPa] |
| I | *0,1 % CNT 5*1000bar* | 1800 | 9 | 44 |
| II | *0,1 % CNT, 0,5 % OBR 1283 5*1000bar* | 1943 | 12 | 46 |
| III | *1 % CNT ) 5*1900 bar* | 1275 | 6 | 36 |
| IV | *1% CNT, 5% OBR 1283 5*1900bar* | 2086 | 8 | 40 |

Aus Tab. 3 ist ersichtlich, dass durch die Zugabe von Mikrogel zu den CNT-Fasern der gemessene E-Modul E, die Bruchdehnung ε_{B} und die Bruchspannung σ_{B} zunehmen.

Dies ist überraschend, da durch Zugabe eines weichen Mikrogelpartikels zu erwarten wäre, dass der E-Modul Emax, die Bruchdehnung ε_{B} und die Bruchspannung σ_{B} abnehmen.

Von den erfindungsgemäßen Mischungen wurde der Abrieb nach DIN 53516 bestimmt (Tab. 4).

**Tab. 4. Abrieb nach DIN 53516 der erfindungsgemäßen Mischungen I bis IV auf Basis RC-PUR KE 8306.**

| Probe | Abrieb [mm³] |
|---|---|
| I 0,1 % CNT 5*1000 bar | 369 |
| II 0, 1 % CNT - 0,5 % OBR 1283 5*1000 bar | 330 |
| III 1 % CNT 5*1900 bar | 372 |
| IV 1 % CNT - 5 % OBR 1283 5*1900 bar | 322 |

Auch der Abrieb wird durch die Zugabe der weichen Nanopartikel zum CNT haltigen, harten Kaltgießelastomer überraschenderweise reduziert.

Zusammengefasst ist festzustellen, dass durch Zugabe der weichen Nanopartikel, OBR 1283, zum CNT-haltigen, harten Kaltgieß-elastomer RC-PUR KE 8306 überraschenderweise die Härte, E-Modul E, Bruchdehnung ε_{B}, Bruchspannung σ_{B} und Abriebwiderstand erhöht bzw. verbessert werden.

Die Shore A-Härte wird in Anlehnung an DIN 53505, die Zugeigenschaften in Anlehnung an EN ISO 527-1 (Normstäbe S2 nach DIN 53504 präpariert) und der Abrieb in Anlehnung an DIN 53516 bei Raumtemperatur (RT) (ca. 23°C) gemessen.

An den erfindungsgemäßen Zusammensetzungen wurden weiterhin rheologische Untersuchungen vorgenommen, um den Einfluß des Mikrogels auf die Rheologie der CNT haltigen Kaltgießelastomer-Polyolkomponente festzustellen (Tab. 5).

**Tab. 5. Viskositäten der erfindungsgemäßen Mischungen I bis IV auf Basis RC-PUR KE 8306 in Abhängigkeit von der Scherrate bei 20°C; MCR 300.**

| Material / Konzentration | Dispergierungsgrad | Scherrate γ= 0,2s⁻¹ | Scherrate γ= 5s⁻¹ | Scherrate γ= 100s⁻¹ | Scherrate γ= 1000s⁻¹ |
|---|---|---|---|---|---|
| | | [Pa*s] | [Pa*s] | [Pa*s] | [Pa*s] |
| | | | | | |
| Mischung K-N.T. 0,1% | 5x1000bar | 1,9 | 1,9 | 1,8 | 1,7 |
| | | | | | |
| Mischung K-N.T. 0,1% + 0,5% OBR 1283 | 5x1000bar | 2,0 | 2,0 | 1,9 | 1,8 |
| | | | | | |
| Mischung K-N.T. 1% | 5x1900bar | 396 | 51 | 7,4 | 3,3 |
| | | | | | |
| Mischung K-N.T. 1% + 5% OBR 1283 | 5x1900bar | 117 | 36 | 7,1 | 3,7 |

Bei den Zusammensetzungen mit einem CNT-Gehalt von 0,1% bezogen auf die Polyolkomponente ist kaum ein Einfluß der Scherrate oder des Mikrogelanteils auf die dynamische Viskosität zu beobachten.

Aus Tab. 5 ist ersichtlich, dass durch die Zugabe von Mikrogel zu der Polyolkomponente, die ein Prozent CNT-Fasern enthält, die Rheologie in interessanter Weise beeinflusst wird: Die an CNT einprozentige Polyolkomponente zeigt bei niedriger Scherrate eine sehr hohe Viskosität (396 Pas). Wünschenswert ist eine niedrige Viskosität, damit die CNT-Nanofasern in höherer Konzentration eingesetzt werden können.

Durch Zugabe von 5 % Mikrogel zu der CNT haltigen Polyolkomponente RC-PUR KE 8306 wird überraschenderweise die dynamische Viskosität bei Scherraten γ von 0,2 s-1, 5 s-1, und 100 s-1 gesenkt, obwohl der Festkörperanteil erhöht wird.

Erst bei der sehr hohen Scherrate γ von 1000 s-1 zeigt sich der Einfluss des erhöhten Festkörpergehaltes.

## Patentansprüche

1. Zusammensetzung, enthaltend mindestens ein Mikrogel (A), mindestens eine Kohlenstoffnanoröhre (B) und mindestens ein organisches Medium (C).

2. Zusammensetzung nach Anspruch 1, **dadurch gekennzeichnet, dass** das mindestens eine organische Medium vernetzbar oder nicht vernetzbar ist.

3. Zusammensetzung nach Anspruch 1 oder 2, **dadurch gekennzeichnet, dass** als Komponente (C) ein vernetzbares organisches Medium verwendet wird und die Zusammensetzung zusätzlich ein Vernetzungsmittel (D) umfasst.

4. Zusammensetzung nach einem der Ansprüche 1 bis 3, **dadurch gekennzeichnet, dass** das Gewichtsverhältnis des mindestens einen Mikrogels (A) zu der mindestens einen Kohlenstoffnanoröhre (B) 0,1 zu 99 bis 99 zu 0,1 beträgt.

5. Zusammensetzung nach einem der Ansprüche 1 bis 4, **dadurch gekennzeichnet, dass** die Primärpartikel der Kohlenstoffnanoröhren (B) einen Durchmesser von 3 bis 100 nm und eine Länge von 50 nm bis 100 µm aufweisen.

6. Zusammensetzung nach einem der Ansprüche 1 bis 5, **dadurch gekennzeichnet, dass** die mindestens eine Kohlenstoffnanoröhre (B) nicht modifiziert ist.

7. Zusammensetzung nach einem der Ansprüche 1 bis 5, **dadurch gekennzeichnet, dass** die mindestens eine Kohlenstoffnanoröhre (B) modifiziert ist.

8. Zusammensetzung nach Anspruch 7, **dadurch gekennzeichnet, dass** die mindestens eine Kohlenstoffnanoröhre (B) durch mindestens eine funktionelle Gruppe, ausgewählt aus der Gruppe, bestehend aus Hydroxyl-, Carboxyl- und Amingruppen modifiziert ist.

9. Zusammensetzung nach einem der Ansprüche 1 bis 8, **dadurch gekennzeichnet, dass** die mindestens eine Kohlenstoffnanoröhre (B) gegenüber dem organischen Medium (C) nicht reaktiv ist.

10. Zusammensetzung nach einem der Ansprüche 1 bis 8, **dadurch gekennzeichnet, dass** die mindestens eine Kohlenstoffnanoröhre (B) gegenüber dem organischen Medium (C) reaktiv ist.

11. Zusammensetzung nach einem der Ansprüche 1 bis 10, **dadurch gekennzeichnet, dass** das Mikrogel (A) auf Kautschuk basiert.

12. Verfahren zur Herstellung einer Zusammensetzung gemäß einem der Ansprüche 1 bis 11, **dadurch gekennzeichnet, dass** man mindestens ein Mikrogel (A), mindestens eine Kohlenstoffnanoröhre (B) und mindestens ein organisches Medium (C) mittels eines Homogenisators, eines Düsenstrahldispergators, einer Perlmühle, einer Dreiwalze, einer Ein- oder Mehrwellen-Extruderschnecke, eines Kneters und/oder eines Dissolvers mischt und/oder dispergiert.

13. Verwendung einer Zusammensetzung gemäß einem der Ansprüche 1 bis 11 zur Herstellung von Polymeren, die mindestens ein Mikrogel und mindestens eine Kohlenstoffnanoröhre enthalten, zur Herstellung von Formkörpern und Beschichtungen und als rheologisches Additiv.

14. Verwendung nach Anspruch 13 zur Herstellung von Formkörpern und Beschichtungen im Bereich Automotive und Dämpfung.

## Claims

1. A composition comprising at least one microgel (A), at least one carbon nanotube (B) and at least one organic medium (C).

2. The composition of claim 1, **characterized in that** the at least one organic medium is crosslinkable or uncrosslinkable.

3. The composition of claim 1 or 2, **characterized in that** a crosslinkable organic medium is used as component (C) and the composition additionally comprises a crosslinking agent (D).

4. The composition of any one of claims 1 to 3, **characterized in that** the weight ratio of the at least one microgel (A) to the at least one carbon nanotube (B) is 0.1:99 to 99:0.1.

5. The composition of any one of claims 1 to 4, **characterized in that** the primary particles of the carbon nanotubes (B) have a diameter of 3 to 100 nm and a length of 50 nm to 100 µm.

6. The composition of any one of claims 1 to 5, **characterized in that** the at least one carbon nanotube (B) is not modified.

7. The composition of any one of claims 1 to 5, **characterized in that** the at least one carbon nanotube (B) is modified.

8. The composition of claim 7, **characterized in that** the at least one carbon nanotube (B) is modified by at least one functional group selected from the group consisting of hydroxyl, carboxyl and amine groups.

9. The composition of any one of claims 1 to 8, **characterized in that** the at least one carbon nanotube (B) is not reactive toward the organic medium (C).

10. The composition of any one of claims 1 to 8, **characterized in that** the at least one carbon nanotube (B) is reactive toward the organic medium (C).

11. The composition of any one of claims 1 to 10, **characterized in that** the microgel (A) is based on rubber.

12. A process for producing a composition according to any one of claims 1 to 11, **characterized in that** at least one microgel (A), at least one carbon nanotube (B) and at least one organic medium (C) are mixed and/or dispersed by means of a homogenizer, a nozzle jet disperser, a bead mill, a three-roll mill, a single-shaft or multishaft extruder screw, a kneader and/or a dissolver.

13. Use of a composition according to any one of claims 1 to 11 for the production of polymers comprising at least one microgel and at least one carbon nanotube for the production of moldings and coatings and as rheological additive.

14. Use of claim 13 for the production of moldings and coatings in the automotive and damping sectors.

## Revendications

1. Composition contenant au moins un microgel (A), au moins une nanofibre de carbone (B) et au moins un milieu organique (C).

2. Composition selon la revendication 1, **caractérisée en ce que** le au moins un milieu organique est réticulable ou non-réticulable.

3. Composition selon la revendication 1 ou 2, **caractérisée en ce qu'**on utilise comme composant (C) un milieu organique réticulable et la composition comprend en outre un agent de réticulation (D).

4. Composition selon l'une des revendications 1 à 3, **caractérisée en ce que** le rapport pondéral entre le au moins un microgel (A) et le au moins un nanotube de carbone (B) vaut de 0,1 sur 99 à 99 sur 0,1.

5. Composition selon l'une des revendications 1 à 4, **caractérisée en ce que** les particules primaires des nanotubes de carbone (B) présentent un diamètre de 3 à 100 nm et une longueur de 50 nm à 100 µm.

6. Composition selon l'une des revendications 1 à 5, **caractérisée en ce que** le au moins un nanotube de carbone (B) n'est pas modifié.

7. Composition selon l'une des revendications 1 à 5, **caractérisée en ce que** le au moins un nanotube de carbone (B) est modifié.

8. Composition selon la revendication 7, **caractérisée en ce que** le au moins un nanotube de carbone (B) est modifié par au moins un groupe fonctionnel, choisi dans le groupe consistant en des groupes hydroxyle, carboxyle et amino.

9. Composition selon l'une des revendications 1 à 8, **caractérisée en ce que** le au moins un nanotube de carbone (B) n'est pas réactif vis-à-vis du milieu organique (C).

10. Composition selon l'une des revendications 1 à 8, **caractérisée en ce que** le au moins un nanotube de carbone (B) est réactif vis-à-vis du milieu organique (C).

11. Composition selon l'une des revendications 1 à 10, **caractérisée en ce que** le microgel (A) est à base de caoutchouc.

12. Procédé pour la préparation d'une composition selon l'une des revendications 1 à 11, **caractérisé en ce qu'**on mélange et/ou disperse au moins un microgel (A), au moins un nanotube de carbone (B) et au moins un milieu organique (C) au moyen d'un homogénéisateur, d'un dispersateur à jets, d'un broyeur à perles, d'un dispositif à trois rouleaux, d'une extrudeuse à vis ayant une ou plusieurs ondes, d'un malaxeur et/ou d'un moyen de dissolution.

13. Utilisation d'une composition selon l'une des revendications 1 à 11 pour la préparation de polymères qui contiennent au moins un microgel et au moins un nanotube de carbone, pour l'obtention de pièces conformées et de revêtements et comme additif rhéologique.

14. Utilisation selon la revendication 13 pour la préparation de pièces conformées et de revêtements dans le domaine de l'automobile et de l'amortissement.
